**Europäisches Patentamt**

**European Patent Office**

**Office européen des brevets**

(19)

(11) Veröffentlichungsnummer : **0 337 069 B1**

(12) # EUROPÄISCHE PATENTSCHRIFT

(45) Veröffentlichungstag der Patentschrift :
04.09.91 Patentblatt 91/36

(51) Int. Cl.$^5$ : **A01C 7/06,** A01C 17/00,
E01C 19/20

(21) Anmeldenummer : 89102369.9

(22) Anmeldetag : 30.01.86

(54) **Schleuderstreuer.**

(30) Priorität : 06.02.85 DE 3503905
05.10.85 DE 3535629

(43) Veröffentlichungstag der Anmeldung :
18.10.89 Patentblatt 89/42

(45) Bekanntmachung des Hinweises auf die
Patenterteilung :
04.09.91 Patentblatt 91/36

(84) Benannte Vertragsstaaten :
AT BE CH DE FR GB IT LI LU NL SE

(56) Entgegenhaltungen :
DE-A- 1 945 076
DE-A- 2 739 733
DE-A- 3 308 102
DE-U- 8 419 557
FR-A- 2 567 549
US-A- 3 679 098
US-A- 4 132 941

(60) Veröffentlichungsnummer der früheren
Anmeldung nach Art. 76 EPü : 0 191 374

(73) Patentinhaber : **Amazonen-Werke H. Dreyer
GmbH & Co. KG
Am Amazonenwerk 9-13
W-4507 Hasbergen-Gaste (DE)**

(72) Erfinder : **Dreyer, Heinz, Dipl.-Ing. Univ. Dr.
Am Amazonenwerk 7
W-4507 Hasbergen (DE)**
Erfinder : **Scheufler, Bernd, Dr.-Ing.
Am Amazonenwerk 101
W-4507 Hasbergen (DE)**

(74) Vertreter : **Patentanwälte Grünecker,
Kinkeldey, Stockmair & Partner
Maximilianstrasse 58
W-8000 München 22 (DE)**

EP 0 337 069 B1

## Beschreibung

Die Erfindung betrifft einen Schleuderstreuer, insbesondere für bekannte Düngemittel, gemäß dem Oberbegriff des Patentanspruchs 1.

Durch das DE-U-8419557 ist ein derartiger Schleuderstreuer bekannt, dessen Fernbedienungsvorrichtung einen elekrischen bzw. einen hydraulischen Hubzylinder zum Verstellen der Schieberanordnung aufweist. Die Verstellung der Schiebeanordnung erfolgt mit jeweils unveränderlicher Geschwindigkeit, so daß es nicht möglich ist, zur Anpassung an unterschiedliche Einsatzbedingungen von beispielsweise einer abrupten Änderung der Ausbringmenge auf eine langsame stufenlose Änderung derselben umzustellen.

Es ist Aufgabe der Erfindung, einen Schleuderstreuer der eingangs genannten Art so weiterzubilden, daß er in einfacher Weise genau an unterschiedliche Einsatzbedingungen angepaßt werden kann.

Diese Aufgabe wird erfindungsgemäß durch das Kennzeichen des Patentanspruchs 1 gelöst.

Die erfindungsgemäß vorgeschlagene schnellere Betätigungsstufe der Fernbedienungsvorrichtung ermöglicht es, die Schieberanordnung beispielsweise bei Fahrtbeginn oder am Feldende schnell von der Schließ- in die Grundöffnungsstellung und zurück zu verstellen. Auf diese Weise kann mit dem Ausbringen der Ausbringmenge abrupt begonnen bzw. aufgehört werden, so daß am Feldbeginn sofort die für die jeweiligen Einsatzbedingungen erforderliche Ausbringmenge ausgebracht werden kann und am Feldende kein Ausbringen außerhalb des Feldes erfolgt. Mit der langsameren Betätigungsstufe ist es hingegen möglich, die Schieberanordnung zur Erzielung eines langsamen Übergangs von der einen zur anderen Ausbringmenge, die beispielsweise durch eine sich stetig ändernde Bodenbeschaffenheit erforderlich ist, langsam und kontinuierlich durzuführen. Mit diesen einfachen Maßnahmen ist es in überraschender Weise möglich den erfindungsgemäßen Schleuderstreuer in einfacher Weise an unterschiedliche Einsatzbedingungen anzupassen.

Vorzugsweise ist die Fernbedienungsvorrichtung mit einem einzelnen Stellglied ausgebildet, welches die langsamere und die schnellere Betätigungsstufe umfaßt. Dieses einzelne Stellglied kann zur Festlegung der Grundöffnungsstellung und der zusätzlichen Öffnungsstellungen ausgebildet sein, so daß keine weiteren Einrichtungen, wie beispielsweise den Schieberanordnungen zugeordnete Anschläge, erforderlich sind, um die Öffnungsweite der Auslauföffnung in diesen verschiedenen Stellungen zu bestimmen. Für diesen Zweck ist es günstig, wenn das einzelne Stellglied als elektrischer oder hydraulischer Hubzylinder ausgebildet ist. Es können auch zwei Stellglieder, nämlich ein erstes Stellglied mit der schnelleren Betätigungsstufe und ein zweites Stellglied mit der langsameren Betätigungsstufe, die beispielsweise in Reihe geschaltet sind, verwendet werden.

Gemäß einer Weiterbildung der Erfindung weist die Schieberanordnung einen ersten und einen zweiten Schieber auf, die beide zur Festlegung der Öffnungsweite der Auslauföffnung zusammenwirken, wobei es vorgesehen ist, daß beide Schieber in die Grundöffnungsstellung und einer der Schieber in die zusätzlichen Öffnungsstellungen verstellbar sind bzw. ist. Diese Ausbildung der Schieberanordnung als Doppelschiebeanordnung bietet den Vorteil, daß nachdem beide Schieber beispielsweise in die Grundöffnungsstellung verstellt worden sind, lediglich ein Schieber zur Anpassung an unterschiedliche Einsatzbedingungen in die zusätzlichen Öffnungsstellungen verstellt werden kann. Dadurch, daß dieser Schieber dabei eine vergleichsweise geringe Verstellstrecke zurücklegt und der andere Schieber unverändert in der Grundöffnungsstellung verbleibt, ist die Einstellgenauigkeit dieser Doppelschieberanordnung sehr hoch. Vorzugsweise ist das erste Stellglied an den ersten Schieber angeschlossen, während das zweite Stellglied beide Schieber miteinander verbindet. Dabei kann das erste Stellglied zwischen dem ersten Schieber und der Bodenplatte angeordnet sein.

Vorteilhafterweise ist das erste Stellglied mit der schnelleren Betätigungstufe als hydraulischer Hubzylinder ausgebildet. Günstig ist dabei eine Ausbildung, gemäß welcher das erste Stellglied als ein in Richtung der Schließstellung der Schieberanordnung wirkender hydraulischer Hubzylinder und als eine in Richtung der Öffnungsstellung der Schieberanordnung wirkende Zugfeder ausgebildet ist. Dabei kann ein verstellbarer Anschlag zur Festlegung der Grundöffnungsstellung der Schieberanordnung, beispielsweise dem ersten Schieber, zugeordnet sein.

Vorteilhafterweise ist das zweite Stellglied mit der langsameren Betätigungstufe zur Festlegung der zusätzlichen Öffnungsstellungen ausgebildet, so daß keine weiteren Einrichtungen, wie beispielsweise der Schieberanordnung zugeordnete Anschläge, erforderlich sind, um die Öffnungsweite der Auslauföffnung bei diesen Stellungen zu bestimmen. Für diesen Zweck ist es günstig, wenn das zweite Stellglied als elektrischer Stellantrieb ausgebildet ist. Zur Erhöhung der Einstellgenauigkeit bzw. als Sicherungsmaßnahme ist es vorteilhaft, der Schieberanordnung verstellbare Anschläge zur Festlegung der zusätzlichen Öffnungsstellungen zuzuordnen.

Um den Schleuderstreuer an unterschiedliche Einsatzbedingungen anzupassen, ist es günstig, wenn die den beiden Verteilorganen zugeordneten Schieberanordnungen mittels der jeweiligen Fernbedienungsvorrichtung unabhängig voneinander in die Schließstellung, in die Grundöffnungsstellung und die zusätzlichen Öffnungsstellungen verstellbar sind.

Dadurch ist es möglich, mit beiden Verteilorganen unterschiedliche Streumengen auszubringen und auf diese Weise den Schleuderstreuer in seitlicher Richtung, d.h. quer zur Fahrtrichtung, an unterschiedliche Einsatzbedingungen anzupassen. Dies ist beispielsweise beim Einsatz des Schleuderstreuers am Hang sehr wichtig, da auf der hangaufwärtigen Seite mehr Material als auf der hangabwärtigen Seite auszubringen ist.

Vorzugsweise ist der erste Schieber zwischen dem zweiten Schieber und der Auslauföffnung angeordnet. Dadurch wird erreicht, daß fast das gesamte, auf der Schieberanordnung lastende Gewicht des auszubringenden Materials auf den vor der Auslauföffnung angeordneten ersten Schieber drückt, so daß der darunter befindliche zweite Schieber, der häufiger als der erste Schieber verstellt werden muß, leicht hin- und herbewegt werden kann.

Um die Schieberanordnungen in besonders einfacher und bequemer Weise verstellen zu können, sind die Fernbedienungsvorrichtungen vorteilhafterweise mittels Betätigungselementen betätigbar, die auf dem den Schleuderstreuer tragenden bzw. ziehenden Schlepper angeordnet sind.

Vorteilhafterweise ist auf dem Schlepper wenigstens ein Anzeigeelement angeordnet, mittels welchem beispielsweise die Stellung der Schieberanordnung und/oder die jeweils eingestellte Öffnungsweite der Auslauföffnung ablesbar ist. Der Schlepperfahrer ist somit jederzeit darüber informiert, welche Ausbringmenge abgegeben wird.

Im folgenden werden Ausführungsbeispiele der Erfindung anhand einer Zeichnung beschrieben. Es zeigen :

Fig. 1 einen erfindungsgemäßen Anbauschleuderstreuer in der Ansicht von hinten,
Fig. 2 den Schleuderstreuer in der Draufsicht und in Teilansicht in vergrößertem Maßstab,
Fig. 3 eine erste Ausführung der linken Dosiereinheit des Schleuderstreuers in vergrößertem Maßstab und in der Draufsicht,
Fig. 4 eine zweite Ausführung der Dosiereinheit des Schleuderstreuers in der Draufsicht,
Fig. 5 eine dritte Ausführung der Dosiereinheit des Schleuderstreuers in der Draufsicht,
Fig. 6 die Dosiereinheit gemäß Fig. 5 in der Ansicht VI-VI in vergrößertem Maßstab,
Fig. 7 eine vierte Ausführung einer Dosiereinheit in der Draufsicht und
Fig. 8 eine fünfte Ausführung einer Dosiereinheit in der Draufsicht,
Fig. 9 eine sechste Ausführung der Dosiereinheit in der Draufsicht
Fig. 10 die Dosiereinheit nach Fig. 9 in der Ansicht X
Fig. 11 die Dosiereiheit nach Fig. 9 in der Ansicht XI,
Fig. 12 eine siebente Dosiereinheit in der Draufsicht,

Fig. 13 die Dosiereinheit gemäß Fig. 12 in Teilansicht und in vergrößertem Maßstab,
Fig. 14 eine achte Ausführung einer Dosiereinheit in der Draufsicht und
Fig. 15 eine neunte Ausführung einer Dosiereinheit ebenfalls in der Draufsicht.
Fig. 16 die Dosiereinheit gemäß Fig. 15 in Telansicht und vergrößertem Maßstab,
Fig. 17 eine zehnte erfindungsgemäß ausgebildete Dosiereinheit eines Schleuderstreuers in der Draufsicht mit der Fernbedienungsvorrichtung,
Fig. 18 eine elfte Dosiereinheit ebenfalls in der Draufsicht und
Fig. 19 eine zwölfte Dosiereinheit ebenfalls in der Draufsicht.

Der als Anbauschleuderstreuer ausgebildete Schleuderstreuer weist einen Rahmen 1 auf, der auf seiner in Fahrtrichtung 2 vorderen Seite 3 mit nicht dargestellten Kupplungselementen zum Anbau an einen ebenfalls nicht dargestellten Schlepper ausgestattet ist. Ferner ist am Rahmen 1 ein Vorratsbehälter 4 befestigt, der zwei durch ein dachförmiges Mittelteil getrennte trichterförmige Behälterteile 5 aufweist. Die trichterförmigen Behälterteile 5 weisen jeweils eine lösbare Bodenplatte 6 auf, welche an den an den Behälterteilen 5 angeschweißten Anschlußelementen 7 mit Schnellverschlüssen 8 befestigt sind. Unterhalb der Bodenplatte 6 ist jeweils ein als Schleuderscheibe 9 ausgebildetes Verteilorgan angeordnet, das über ein Getriebe 10 von der Schlepperzapfwelle angetrieben wird.

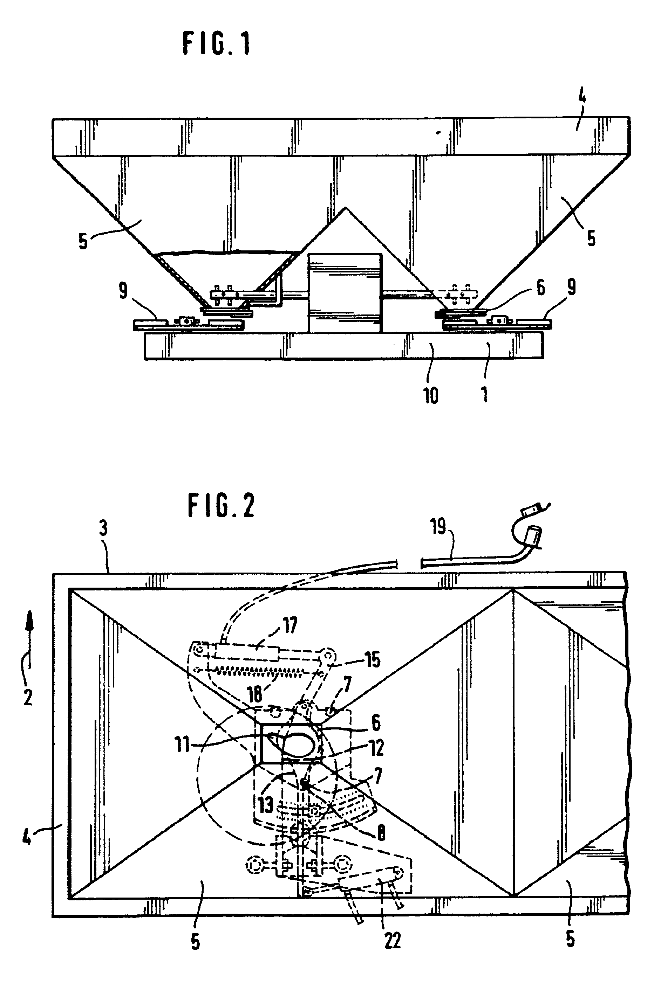

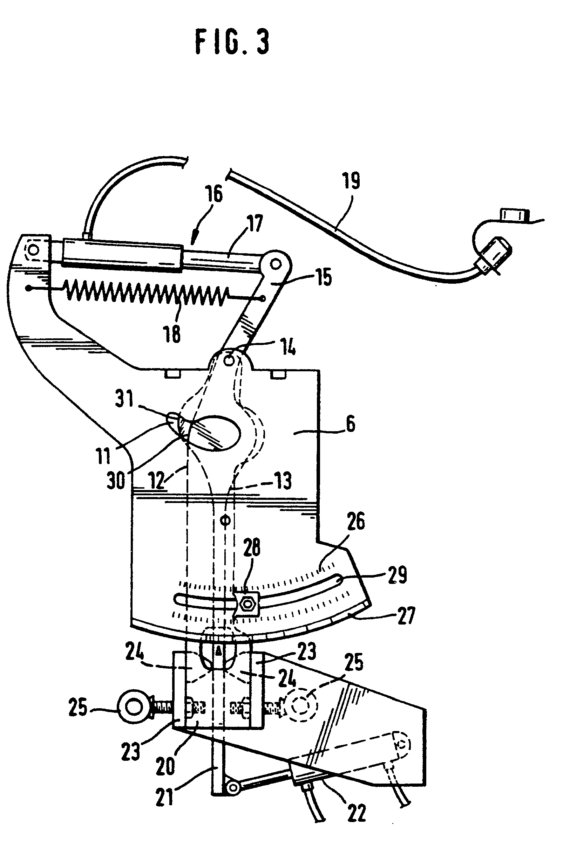

Die Bodenplatten 6 sind als Dosierorgan ausgebildet. In jeder Bodenplatte 6 befindet sich jeweils eine Auslauföffnung 11, deren Öffnungsweite durch eine unter der Bodenplatte 6 und vor der Auslauföffnung 11 angeordnete Schieberanordnung bestehend aus einem ersten Schieber 12 und einem zweiten Schieber 13 mittels je einer Fernbedienungsvorrichtung eingestellt werden kann. Gemäß dem Ausführungsbeispiel der Fig. 2 und 3 sind unterhalb jeder Bodenplatte 6 die beiden Schieber 12 und 13 auf einem Bolzen 14 schwenkbar angeordnet. Direkt unter der Bodenplatte 6 befindet sich der Schieber 12. Unter dem Schieber 12 ist der Schieber 13 angeordnet, so daß sich der Schieber 12 zwischen der Bodenplatte 6 und dem Schieber 13 befindet. Ein Bedienungshebel 15 des Schiebers 12 ragt nach vorn über den Bolzen 14 hinaus. An diesem über den Bolzen 14 hinausragenden Bedienungshebel 15 ist ein als Teil der Fernbedienungsvorrichtung ausgebildetes erstes Stellglied 16 angeordnet, das als einfach wirkender Hydraulikzylinder 17 und als diesem entgegenwirkende Zugfeder 18 ausgebildet ist. Der Hydraulikzylinder 17 und die Zugfeder 18 sind an der Bodenplatte 6 befestigt. Der jeweilige Hydraulikzylinder 17 ist über einen Hydraulikschlauch 19 an die Hydraulikanlage eines Schleppers angeschlossen und kann über Steuergeräte von dort aus vom Schlepperfahrer betätigt werden. Das Stellglied 16 und der Hydraulikschlauch 19 stellen eine Stellgliedanordnung dar.

Der Schieber 12 weist auf seiner dem Bedienungshebel 15 abgewandten Seite ein Verlängerungsstück 20 auf. Der Schieber 13 besitzt ebenfalls einen Bedienungshebel 21, der sich bis über das Verlängerungsstück 20 hinaus erstreckt. Zwischen dem Bedienungshebel 21 und dem Verlängerungsstück 20 ist als zweites Stellglied der Fernbedienungsvorrichtung ein doppeltwirkender Hydraulikzylinder 22 angeordnet, der über Hydraulikschläuche mit der Hydraulikanlage des Schleppers verbunden ist und vom Schleppersitz aus vom Schlepperfahrer über Steuergeräte betätigt werden kann. Auf beiden Seiten des Bedienungshebels 21 sind an dem Verlängerungsstück 20 des Schiebers 12 jeweils aufrecht stehend Bleche 23 angeschweißt. An diesen Blechen 23 sind jeweils Gummipuffer 24 befestigt, die an dem Bedienungshebel 21 des Schiebers 13 anliegen, so daß sie den Bedienungshebel 21 und somit den Schieber 13 in einer genau definierten Lage gegenüber dem Schieber 12 halten bzw. fixieren, wenn der Hydraulikzylinder 22 drucklos geschaltet ist. Weiterhin sind an den Blechen 23 noch zwei Anschläge in Form einstellbarer Schrauben 25 angeordnet. An der Bodenplatte 6 befinden sich noch Einstellskalen 26 und 27 und ein weiterer einstellbarer Anschlag 28 für die Festlegung der Grundöffnungsstellung des Schiebers 13. Der Anschlag 28 ist in einem Langloch 29 verstellbar. Am Anschlag 28 liegt das Verlängerungsstück 20 des Schiebers 12 an, wenn die Schieber sich in ihrer Öffnungsstellung befinden. Die Einstellskala 26 ist für die Grundeinstellung vorgesehen und weist eine lineare Teilung auf. Anhand dieser Einstellskala in Verbindung mit den Werten einer Streutabelle kann der Anschlag 28 eingestellt werden. Die Einstellskala 27 weist eine prozentuale Teilung auf, so daß jeweils Ausbringmengenwerte eingestellt werden können, die prozentual größer und kleiner als der Grundmengenwert sind. Diese größeren und kleineren Ausbringmengenwerte werden durch die Einstellung der Schrauben 25 festgelegt. Durch die prozentuale Einteilung der Skala braucht der Landwirt jeweils nicht den Änderungswert errechnen, wenn er beispielsweise 10% mehr oder weniger als den Grundmengenwert ausbringen will.

Die die Auslauföffnung 11 freigebende Kante 30 des Schiebers 12 springt gegenüber der Kante 31 des Schiebers 13 etwas zurück. Somit kann durch Verstellen des Schiebers 13 gegenüber dem Schieber 12 mit Hilfe des Hydraulikzylinders 22 jeweils ein kleinerer und ein größerer Ausbringmengenwert während des Ausbringvorganges eingestellt werden.

Die Veränderung der Ausbringmenge pro Flächeneinheit während des Ausbringvorganges und während der Fahrt geschieht folgendermaßeen :

Zunächst stellt der Landwirt anhand der Streutabelle den Anschlag 28 so ein, daß dessen Zeiger auf den aus der Streutabelle entnommenen Wert der Skala 26 zeigt. In der in Fig. 3 eingezeichneten Stellung befinden sich die Schieber 12 und 13 in Betriebsstellung ; d.h. in Öffnungsstellung. In dieser eingezeichneten Stellung wird nur ein relativ kleiner Querschnitt der Auslauföffnung freigeben, so daß eine relativ kleine Ausbringmenge ausgebracht wird. Über den Hydraulikzylinder 17 werden die Schieber 12 und 13 betätigt. Wenn der Schieber, wie in dem hier dargestellten Fall, drucklos geschaltet ist, zieht die Zugfeder 18 die beiden Schieber in ihre (eingezeichnete) Öffnungsstellung. Wenn nun der Hydraulikzylinder 17 mit Druck beaufschlagt wird, so wird die Auslauföffnung geschlossen, indem die Schieber in ihre Schließstellung bewegt werden und die Auslauföffnung abdecken. In der Öffnungsstellung liegt das Verlängerungsstück 20 des Schiebers 12 an dem einstellbaren Anschlag 28 an. Wenn der Zylinder 22 drucklos geschaltet ist, befindet sich der Schieber 21 in seiner Grundeinstellung, in der er von den Gummipuffern 24 gehalten wird.

Mit Hilfe der Schrauben 25 kann der Landwirt nun vor Beginn der Arbeit einen größeren und einen kleineren Ausbringmengenwert gegenüber dem Grundausbringmengenwert einstellen. Hierbei ist von besonderem Vorteil, daß die Skala 27 eine prozentuale Einteilung aufweist. So braucht der Landwirt nur den Schieber jeweils nur soweit zu bewegen, bis der auf dem Bedienungsebel 21 angeordnete Zeiger mit dem gewünschten größeren und kleineren Ausbringmengenänderungswert übereinstimmt. Diese beiden Extremstellungen des Schiebers 13 werden durch die Einstellschrauben 25 entsprechend eingestellt.

Auf dem Acker werden am Feldende die Auslauföffnungen dadurch geöffnet, daß die Hydraulikzylinder 17 über die auf dem Schlepper befindlichen Steuergeräte drucklos geschaltet werden. Schlagartig ziehen die Zugfedern 18 die jeweiligen Schieber 12 und 13 in ihre eingestellte Öffnungsstellung, so daß das Verlängerungsstück 20 an dem einstellbaren Anschlag 28 anliegt. Wenn der Landwirt nun während der Feldüberfahrt und des Ausbringvorganges aufgrund der vorliegenden Einsatzverhältnisse eine etwas kleinere oder größere Ausbringmenge ausbringen will, so betätigt er das entsprechende Steuergerät, so daß der Hydraulikzylinder 22 entsprechend betätigt wird. Über diesen Hydraulikzylinder 22 wird dann der Schieber 13 gegenüber dem Schieber 12 bewegt, so daß entsprechend der Betätigung des Hydraulikzylinders 22 ein kleinerer oder ein größerer Öffnungsquerschnitt gegenüber der Grundeinstellung eingestellt wird. Soll anschließend wieder die eingestellte Grundmenge ausgebracht werden, so wird der Hydraulikzylinder 22 vom Landwirt über das entsprechende Steuergerät drucklos geschaltet.

Jetzt drücken die Gummipuffer 22 den Schieber 13 wieder in seine Grundeinstellung. Somit ist also der durch den Schieber 13 freigegebene Öffnungsquerschnitt der Auslauföffnung 11 während des Einsatzes des Streuers über das als Hydraulikzylinder 22 ausgebildete zweite Stellglied der Fernbedienungsvorrichtung derart veränderbar, daß ein kleinerer und ein größerer Öffnungsquerschnitt gegenüber der Grundeinstellung einstellbar ist, so daß eine kleinere und eine größere Ausbringmenge (Öffnungsweite der Auslauföffnung) jeweils einstellbar ist. Der Schieber 12 ist somit gegenüber dem ersten Stellglied 16 mit Hilfe des als Hydraulikzylinder 22 ausgebildeten zweiten Stellglieds hin- und herbewegbar.

Wichtig ist, daß die Kante 30 des Schiebers 12 zumindest gegenüber der Kante 31 des Schiebers 13 soweit zurückspringt, daß in der größten Verstellung des Schiebers 13 die Kante 30 des Schiebers 12 die Kante des Schiebers 13 nicht überragt. Nur so kann dann auch tatsächlich die gewünschte größere Ausbringmenge gegenüber dem Grundmengenwert ausgebracht werden.

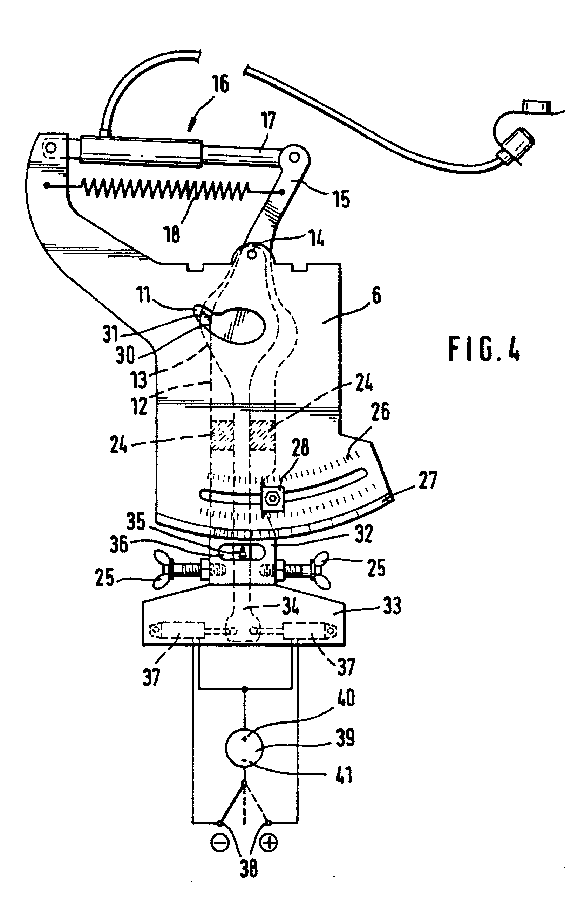

Die Ausführung der Dosiereinheit gemäß Fig. 4 unterscheidet sich von der Dosiereinheit gemäß Fig. 3 im wesentlichen durch die andere Ausbildung der Fernbedienungsvorrichtung für die Einstellung der kleineren und größeren Ausbringmenge pro Flächeneinheit gegenüber der Grundausbringmenge. Unter der Bodenplatte 6 sind die beiden Schieber 12 und 13 an dem Bolzen 14 schwenkbar angeordnet. Der Schieber 12, dessen Kante 30 gegenüber der Kante 31 des Schiebers 13 zurückspringt, ist direkt unter der Bodenplatte 6 angeordnet. Unter diesen Schiebern 12 befinden sich dann die Schieber 13. Der Bedienungshebel 15 ragt über den Bolzen 14 hinaus. Zwischen diesem Bedienungshebel 15 und der Bodenplatte 6 ist das erste Stellglied 16 angeordnet, das als Zugfeder 18 und Hydraulikzylinder 17 ausgebildet ist. Über den Hydraulikzylinder 17 in Verbindung mit der Zugfeder 18 werden die Schieber 12 und 13 jeweils in ihre Schließ- bzw. Öffnungsstellung gebracht. Der Schieber 12 weist an seiner dem Bedienungshebel 15 gegenüberliegenden Seite ein Verlängerungsstück 32 auf. Dieses Verlängerungsstück 32 weist an seinem Ende ein Querstück 33 auf. Der Schieber 13 besitzt den Bedienungshebel 34, der bis zu dem Querstück nach hinten ragt. Weiterhin sind an dem Verlängerungsstück 32 die beiden Gummipuffer 24 beidseits des Bedienungshebels 34 angeordnet, die den Bedienungshebel in einer Stellung exakt fixieren. Schließlich weist der Bedienungshebel noch einen Zeiger 35 auf, der durch eine Öffnung 36 in dem Verlängerungsstück 32 ragt. Dieser Zeiger 35 befindet sich in dem Bereich der Prozentskala 27, die an der Bodenplatte 6 angeordnet ist. Zwischen dem Querstück 33 und dem Bedienungshebel 34 sind als zweites Stellglied der Fernbedienungsvorrichtung elektrische Hubmagnete 37 angeordnet, die mit der schematisch angedeuteten elektrischen Spannungsanlage 38 des Schleppers sind. Über einen Schalter 39 werden die Hubmagnete 37 entsprechend betätigt. Wenn der Schalter 39 auf das Plussymbol 40 geschaltet ist, wird die größere Ausbringmenge und wenn der Schlater 39 auf das Minussymbol geschaltet ist, wird die kleinere Ausbringmenge ausgebracht. Außerdem kann der Schalter 39 auch noch in eine Neutralstellung geschaltet werden, so daß die Hubmagnete 37 spannungslos geschaltet sind.

Damit die Schieber 12 und 13 von den Hubmagneten 37 sehr leicht gegeneinander hin- und herbewegt bzw. der Schieber 13 immer wieder von den Gummipuffern 24 bei der spannunglosen Schaltung der Hubmagnete exakt wieder in die Grundstellung gegenüber dem Schieber 13 gedrückt wird, ist der direkt vor der Auslauföffnung 11 angeordnete Schieber 12 in axialer Richtung gegenüber der Bodenplatte 6 auf dem Bolzen 14 mittels eines Sicherungselementes fixiert. Außerdem ist das hintere Ende des Schiebers 12 an der Bodenplatte gelagert. Somit wird dieser Schieber 12 direkt vor der Auslauföffnung 11 gehalten und das auf diesem Schieber 12 lastende Gewicht des Materiales wirkt nicht auf den Schieber 13 ein. Weiterhin befindet sich zwischen den Schiebern 12 und 13 innerhalb ihrer projizierten Berührungsfläche ein kleiner Spalt. Schließlich befindet sich auf den beiden Berührungsflächen der Schieber 12 und 13 ein Material, welches einen kleinen Reibwiderstand aufweist.

Die Veränderung der Ausbringmenge pro Flächeneinheit währen des Ausbringvorganges und während der Fahrt geschieht folgendermaßen.

Das Öffnen und Schließen der Auslauföffnung geschieht sehr schnell über das erste Stellglied 16. Die Grundöffnungsstellung der Schieber 12 und 13 wird durch den einstellbaren Anschlag 28 bestimmt. Der Schieber 13 gibt dann die durch den Anschlag 28 festgelegte Grundöffnungsweite der Auslauföffnung 11 frei, wenn der Hydraulikzylinder 17 drucklos geschaltet ist und die Zugfeder 18 dann schlagartig die Schieber 12 und 13 bewegt, so daß das Verlängerungstück 32 an dem Anschlag 28 zur Anlage kommt. Die Festlegung der exakten kleineren und größeren Ausbringmengen wird durch die Einstellschrauben 25 bestimmt.

Bevor der Landwirt den Vorratsbehälter 4 mit Material füllt, muß der Schieber 12 bzw. 13 über den Hydraulikzylinder 17 in sein Schließstellung gebracht werden, so daß die Schieber 12 und 13 die Auslauföffnung vollkommen abdecken. Am Feldanfang wird das Steuergerät betätigt, so daß der Hydraulikzylinder 17 drucklos geschaltet wird. Durch die Zugfeder 18 werden die Schieber 12 und 13 schlagartig in ihre Öffnungsstellung gezogen. Wenn nun während der Feldüberfahrt aufgrund der Einsatzverhältnisse die Ausbringmenge vergrößert werden soll, so wird der Schalter 39 so gestellt, daß er auf das Plussymbol, zeigt. Hiedurch werden die Hubmagnete 37 so geschaltet, daß der Schieber 13 gegenüber den Schiebern 12 nach rechts bewegt wird bis er an der Schraube 25 anliegt und somit eine größere Fläche der Auslauföffnung freigibt. Soll dann nach einiger Zeit wieder die Grundmenge ausgebracht werden, so ist lediglich der Schalter 39 vom Schlepperfahrer in seine Neutralstellung zu bringen, so daß die Hubmagnete 37 spannungslos geschaltet werden. Dann drücken die Gummipuffer 24 den Schieber 13 wieder in seine Grundstellung. Wenn dann eine kleinere Ausbringmenge während der Feldüberfahrt ausgebracht werden soll, weil dies die Einsatzbedingungen erfordern, so wird der Schalter 39 in eine Stellung gebracht, daß der Schalter auf das Minussymbol zeigt. Jetzt bewegen die Hubmagnete 37 den Schieber 13 nach links, so daß eine kleinere Öffnungsweite der Auslauföffnung freigegeben wird. Wenn dann wieder die Grundmenge ausgebracht weren soll, so wird den Schalter 39 wieder in seine Neutralstellung gebracht, so daß die Hubmagnete 37 spannungslos geschaltet sind. Auch in diesem Fall drücken dann die Gummipuffer 24 den Schieber 13 wieder in seine Grundstellung gegenüber dem Schieber 12.

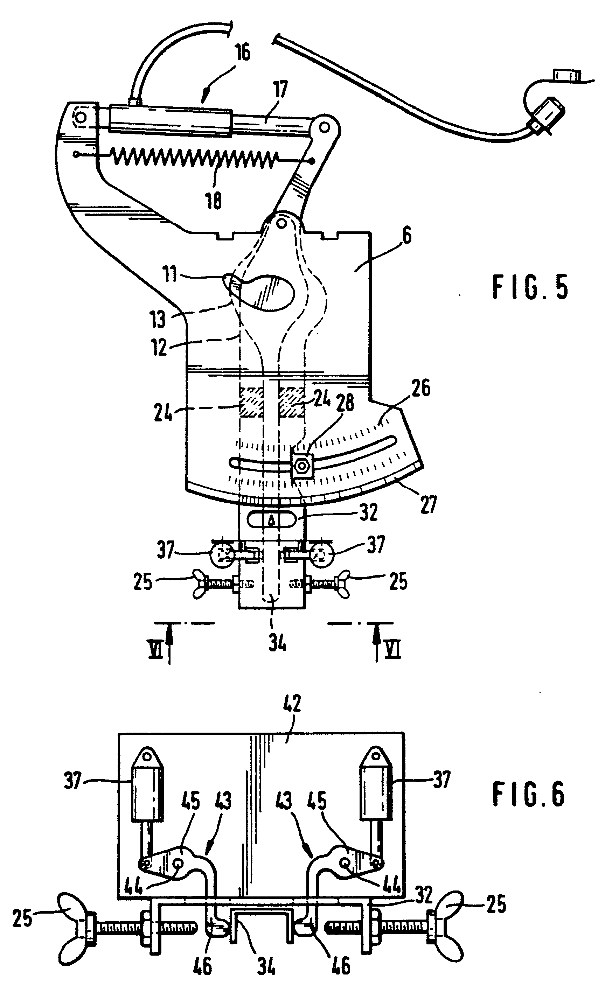

Die Dosiereinheit gemäß den Fig. 5 und 6 unterscheidet sich von der Dosiereinheit gemäß Fig. 4 lediglich durch eine andere Anordnung und Zuordnung der Hubmagnete 37 zu den Schiebern 12 und 13. An dem Ende des Verlängerungsstückes 32, welches dem Schieber 12 zugeordnet ist, ist eine stehende Konsole 42 angeschweißt. An dieser Konsole 42 sind die Hubzylinder 37 hängend in einem geschützten und gut zugänglichen Bereich angeordnet. Zudem hat die hängende Anordnung der Hubmagnete 37 den Vorteil, daß keine Feuchtigkeit und keine Düngemittel in das Innere der Hubmagnete eintreten können. Die Hubmagnete 37 wirken über Kipphebel 43 auf den Bedienungshebel 34. Die Kipphebel 43 sind auf einem an der Konsole 42 angeschweißten Bolzen 44 gelagert. Die Kipphebel 43 weisen jeweils unterschiedlich lange Hebelarme 45 und 46 auf. An dem kürzeren Hebelarm 45 ist jeweils das als Hubmagnet 37 ausgebildete zweite Stellglied der Fernbedienungsvorrichtung angeordnet und der längere Hebelarm 46 wirkt auf den Bedienungshebel 34 des Schiebers 13 ein. Die Funktion und Verstellung des Schiebers 13 gegenüber dem Schieber 12 bzw. dem Anschlag 28, welcher die Grundeinstellung festlegt, erfolgt über die Hubmagnete 37 entsprechend dem Ausführungsbeispiel gemäß Fig. 4.

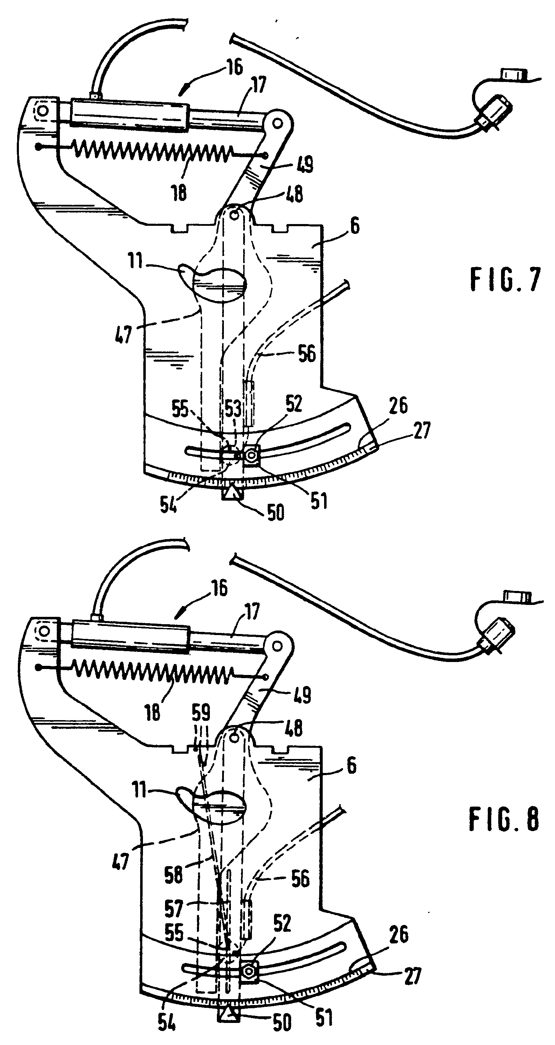

Die Dosiereinheit gemäß Fig. 7 weist ebenfalls die Bodenplatte 6 auf. Diese Dosiereinheit ist ebenfalls unter dem Vorratsbehälter 4 des Anbauschleuderstreuers anzuordnen. Die Bodenplatte 6 weist die Auslauföffnung 11 auf, deren Öffnungsweite mit dem unter der Bodenplatte 6 angeordneten Schieber 47 eingestellt wird. Der Schieber 47 ist auf dem an de Bodenplatte 6 angeordneten Bolzen 48 schwenkbar gelagert. Weiterhin ist der Schieber 47 in seinem dem Bolzen 48 abgewandten Bereich durch nicht dargestellte Mittel geführt, so daß er sich immer dicht unter der Bodenplatte 6 befindet. Der Schieber 47 weist einen über den Bolzen 48 hinausragenden Bedienungshebel 49 auf. Zwischen dem Bedienungshebel 49 und der Bodenplatte 6 ist das erste Stellglied 16 angeordnet, welches die Hydraulikzylinder 17 und die Zugfeder 18 umfaßt. Über das erste Stellglied 16 ist der Schieber 47 in seine Schließstellung und seine Öffnungsstellung zu bringen, in dem der Hydraulikzylinder 17 über das Steuergerät der Schlepperhydraulikanlage entsprechend betätigt wid. Weiterhin ist auf dem Bolzen 48 ein Anschlaghebel 50 angeordnet. Der Anschlaghebel 50 weist das angeschweißte Klemmstück 51 auf, welches mit einer Klemmschraube 52, die durch das Langloch in der Bodenplatte 6 ragt, versehen ist, so daß der Anschlaghebel 50 an der Bodenplatte 6 in verschiedenen Stellen festgeklemmt werden kann.

Weiterhin ist an dem als Anschlaghebel 50 ausgebildeten Bedienungshebel noch das zweite Stellglied 53 der Fernbedienungsvorrichtung angeordnet, mit dessen Hilfe größere und kleinere Ausbringmengen pro Flächeneinheit eingestellt werden können. Das zweite Stellglied umfaßt einen Exzenter 54, der an dem Anschlaghebel 50 angeordnet ist. An diesen Exzenter 54, der drehbar auf dem an dem Anschlaghebel befestigten Bolzen gelagert ist, ist ein Bowdenzug 56 befestigt. An dem Exzenter 54 liegt der Schieber 47 an. Weiterhin weist der Exzenter 54 eine Raste auf die die Grundeinstellung des Exzenters 54 und somit auch die Grundeinstellung des Schiebers 47 gegenüber dem Anschlaghebel festgelegt. Durch entsprechendes Verdrehen des Exzenters 54 mittels des Bowdenzuges 56, dessen Betätigungselement auf dem den Anbauschleudersteuer tragenden Schlepper angeordnet ist, wird der Exzenter 54 verdreht. An dem Betätigungselement des Bowdenzuges sind einige Anzeigeelemente in Form von Zeigern angeordnet, damit jeweils die Stellung der Exzenterschiebe und somit die Schieberstellung (Grundeinstellung, kleine Ausbringmenge, große Ausbringmenge) abgelesen werden kann. Hierbei können noch weitere als Rassten ausgebildete Anschläge für die Exzenterschiebe vorgesehen sein, um ebenfalls die größere und kleinere Ausbringmenge auch genau festlegen zu können. Der Exzenter 54 ist somit als Anschlag ausgebildet, der die jeweiligen Ausbringmengen exakt festlegt. An der Bodenplatte 6 sind die Skalen 26 und 27 angeordnet, wobei die Skale 26 eine lineare Teilung und die Skala 27 eine prozentuale Teilung aufweist.

Die Einstellung der Grundausbringmenge und die größere und kleinere Ausbringmenge gegenüber der Grundausbringmenge geschieht folgendermaßen :

Zunächst wird der Anschlaghebel 50 anhand von aus Streutabellen entnommenen Werten eingestellt, wobei der an dem Anschlaghebel 50 angeordnete Zeiger mit dem entsprechenden Wert der Skala 56 zur Deckung gebracht wird. Hierbei befindet sich der Exzenter 54 in seiner Grundeinstellung. Die Exzenterscheibe weist noch zwei weitere Rasten auf, die beispielsweise eine 10%ige Veränderung der Ausbringmenge bestimmen, so daß von der Grundeinstellung aus die Ausbringmenge um 10% vergrößert und um 10% verkleinert werden kann. Hierbei können diese beiden zusätzlichen Rasten jeweils eingestellt werden, so daß auch jeweils bei unterschiedich großen Grundausbringmengenwerten jeweils beispielsweise 10% mehr oder weniger ausgebracht werden kann.

Zu Beginn der Arbeit befindet sich der Schieber 4 in Schließstellung, d.h. er deckt die gesamte Auslauföffnung 11 ab, so daß kein Material aus derselben austreten kann. Am Feldanfang wird das Steuergerät, welches dem ersten Stellglied 16 zugeordnet ist, betätigt, so daß der Hydraulikzylinder 17 drucklos geschaltet wird. Schlagartig zieht die Zugfeder 18 den Schieber in sein Öffnungsstellung, so daß er an dem Exzenter 54 anliegt. Soll nun während der Feldüberfahrt eine größere Ausbringmenge Material pro Flächeneinheit ausgebracht werden, so bedient der Landwirt das Betätigungselement des Bowdenzuges 56, so daß die Exzenterscheibe aus ihrer Grundstellung entgegen dem Uhrzeigersinn verdreht wird. Durch die Zugfeder 18 wird der Schieber 47 etwas weiter aufgezogen, so daß ein größerer Öffnungsquerschnitt der Auslauföffnung 11 freigegeben wird. Falls es die Einsatzverhältnisse nicht mehr erfordern, daß eine größere Ausbringmenge als der Grundausbringmengenwert ausgebracht wird, betätigt der Landwirt wiederum das Betätigungselement des Bowdenzuges 56, so daß der Exzenter 54 wieder in seine Grundeinstellung zurückgedreht wird, so daß er wieder in seine Grundeinstellung einrastet. Wenn nun eine kleinere Ausbringmenge Material pro Flächeneinheit ausgebracht werden soll, so betätigt der Landwirt wiederum den Hebel des Bowdenzuuges 56, jetzt jedoch in die andere Richtung, so daß der Exzenter 54 im Uhrzeigersinn beim Ausführungsbeispiel verschwenkt wird. Hierdurch wird der Schieber 47 verschwenkt, so daß er nur noch einen kleineren Öffnungsquerschnitt der Auslauföffnung freigibt. Somit wird eine kleinere Ausbringmenge Material pro Flächeneinheit ausgebracht. Wenn es die Einsatzverhältnisse nicht mehr erfordern, daß eine kleinere Ausbringmenge Material pro Flächeneinheit ausgebracht werden muß, so wird der Betätigungshebel des Bowdenzuges 56 wiederum betätigt, so daß der Exzenter 54 in seine Grundeinstellung zurückgedreht wird, so daß er in diese Einstellung einrastet. Durch die grundsätzliche Bewegung des Schiebers 47 durch das erste Stellglied 16 zum Öffnen und Schließen wird uanbhängig vom zweiten Stellglied 53 der Schieber 47 jeweils sehr schnell in seine Öffnungs- und Schließstellung gebracht, so daß vom Feldanfang bis zum Feldende jeweils exakt die gewünschte Ausbringmenge Material pro Flächeneinheit ausgebracht wird, so daß am Feldende bzw. Feldanfang keine Unter- bzw. Überdüngung entsteht.

Die Dosiereinheit gemäß Fig. 8 entspricht im wesentlichen der Dosiereinheit gemäß Fig. 7. Sie unterscheidet sich lediglich durch eine Zusatzanordnung zu dem Exzenter 54 und der verschiebbaren Anordnung des Exzenters 54 an dem Anschlaghebel 50. Der Exzenter 54 ist an dem Anschlaghebel 50 in einer Längsführung 57 verschiebbar angeordnet. Der Bolzen 55 des Exzenters 54 kann in der Längsführung 57 verschoben werden. An dem Bolzen 55 ist ein Gestänge 58 angeordnet, welches in einem Abstand zu dem Bolzen 48, um welches der Anschlaghebel verschwenkt werden kann, an der Bodenplatte 6 in verschiedenen Löchern 59 eingehängt werden kann. Der Exzenter 54 befindet sich somit bei verschiedenen Stellungen des Anschlaghebels 50, der die jeweilige Grundausbringung bestimmt, in unterschiedlichen Abständen zu dem Bolzen 48. Hierdurch wird erreicht, daß bei jeder Grundausbringmenge immer die gleiche prozentuale Mengenänderung, bezogen auf die jeweilige Grundausbringmenge, bei gleicher Exzenterverstellung erreicht wird. Unterschiedliche prozentuale Änderungen werden durch das Einhängen des Gestänges 58 in die entsprechenden Löcher 59 erreicht. Bei dieser Ausführung ist die Befestigung des Bowdenzuges an dem Anschlaghebel 50 mit dem Bolzen 55 verschiebbar angeordnet.

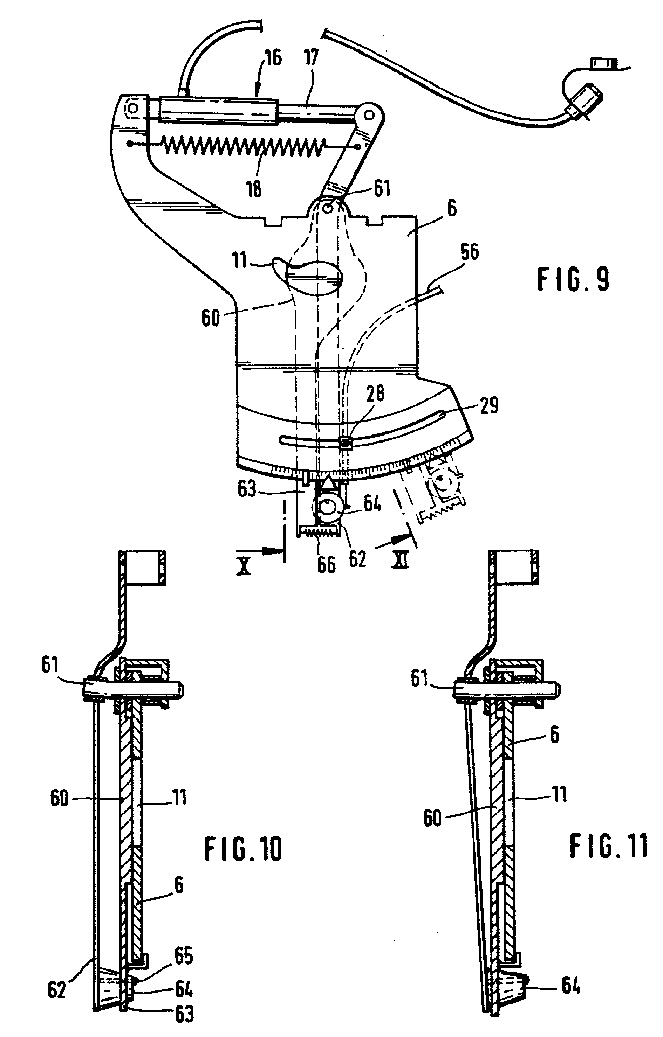

Die Dosiereinheit gemäß den Fig. 9 bis 11 weist die Bodenplatte 6 auf, die ebenfalls unter dem Vorratsbehälter 4 zu befestigen ist. In der Bodenplatte 6 befindet sich die Auslauföffnung 11, welche über den Schieber 60 zu verschließen ist bzw. deren Öffnungsweite durch die jeweilige Stellung des Schiebers 60 bestimmt wird. Der Schieber 60 ist auf dem Bolzen 61 schwenkbar gelagert. Der Bolzen 61 ist an der Bodenplatte 6 befestigt. Unterhalb der Lagerung des Schiebers 60 ist der Bolzen 61 abgeknickt. An diesem abgeknickten Ende des Bolzens 61 ist ein Bedienungshebel 62, der als Anschlaghebel ausgebildet ist, schwenkbar gelagert. Der Bedienungshebel 62 ragt an seinem vorderen Ende über den Bolzen 61 hinaus. Zwischen diesem Ende des Bedienungshebels 62 und der Bodenplatte 6 ist das erste Stellglied 16 welches den Hydraulikzylinder 17 und die Zugfeder 18 aufweist, angeordnet. An dem anderen Ende des Bedienungshebels 62 ist ein als Anschlag ausgebildeter kegelförmiger Exzenter 64 für einen Bedienungshebel 63 des Schiebers 60 auf einem Bolzen 65, der an dem Hebel 62 angeschweißt ist, angeordnet. An dem Bedienungshebel 62 ist ein Bowdenzug 56 angeordnet, der an dem Exzenter 64 angeschlossen ist, so daß dieser über den Bowdenzug 56 verdreht werden kann. Das Betätigungselement des Bowdenzuges 65 ist auf dem den Anbauschleuderstreuer tragenden Schlepper angeordnet. An der Bodenplatte 6 ist in einem Langloch 29 der einstellbare Anschlag 28 angeordnet, der die Grundausbringmenge Material pro Flächeneinheit bestimmt. An diesem Anschlag 28 liegt der Bedienungshebel 62 in der Öffnungsstellung des Schiebers 60 an. Zwischen dem Bedienungshebel 63 des Schiebers 60 und dem Bedienungshebel 62 ist eine Zugfeder 66 angeordnet, die den Bedienungshebel 63 des Schiebers 60 gegen den Exzenter 64 zieht.

Der Bedienungshebel 62 mit dem kegelförmigen Exzenter 64 ist auf dem abgeknickten Ende des Bolzens 61 so angeordnet, daß sich die Höhenlage des Exzenters 64 bei jeder Grundeinstellung der Öffnungsweite des Schiebers 60 gegenüber dem Bedienungshebel 63 des Schiebers 60 ändert. Hiebei ist die Schwenkachse des Bedienungshebels 62 des Exzenters gegenüber der Schwenkachse des Schiebers 60 geneigt. Hierdurch wird bei jeweils gleicher Verstellung des Exzenters 64 bei jeder Grundmengeneinstellung die gleiche prozentuale Änderung des Ausbringmengenwertes, bezogen auf die jeweilige Ausbringmenge, erreicht. Der Landwirt braucht keine Umrechung von prozentualer Änderung n absolute Ausbringmengenwerte durchzuführen. Bei kleiner Grundmengeverstellung nimmt der Exzenter 64 die in Fig. 9 mit durchgezogenen Linien bzw. in Fig. 10 dargestellte Position zu dem Bedienungshebel 64 des Schiebers 60 ein. Bei einer großen Grundmengeneinstellung nimmt der Exzenter 64 die in Fig. 9 mit strichpunktierten Linien angedeutete Stellung bzw. die in Fig. 11 dargestellte Position ein.

Über das erste Stellglied 16 wird der Bedienungshebel 62 bewegt. Dadurch, daß der Bedienungshebel 63 des Schiebers 60 über die Zugfeder 66 an den Exzenter 64 des Bedienungshebels 62 gezogen wird, wird somit der Schieber 60 gleichzeitig mit verstellt. Über das erste Stellglied 16 wird der Schieber 60 in seine Schließstellung und in seine Grundöffnungsstellung gebracht, die durch den Anschlag 28 bestimmt wird. Gegenüber dieser Grundeinstellung kann der Schieber 60 durch Verdrehen des Exzenters 64 mittels des Bowdenzuges 56 verstellt werden. Somit kann gegenüber der Grundausbringmenge ein kleinerer und ein größerer Ausbringmengenwert eingestellt werden, wobei dieser größere und kleinere Ausbringmengenwert beispielsweie 10% größer bzw. kleiner als der Grundausbringmengenwert ist. Die Grundeinstellung des Schiebers 60 gegenüber dem Bedienungshebel 62 wird durch eine Rastanordnung zwischen dem Exzenter 64 und dem Bedienungshebel 62 bestimmt. Ebenfalls können weitere Raststellungen zwischen dem Bedienungshebel 62 und dem Exzenter 64 vorgesehen sein, die dann jeweils exakt die kleinere und größere Ausbringmenge festlegen. Sinnvollerweise ist der Bowdenzug 56 selbsthemmend ausgebildet, so daß die jeweilige eingestellte Stellung des Exzenters 64 beibehalten bleibt.

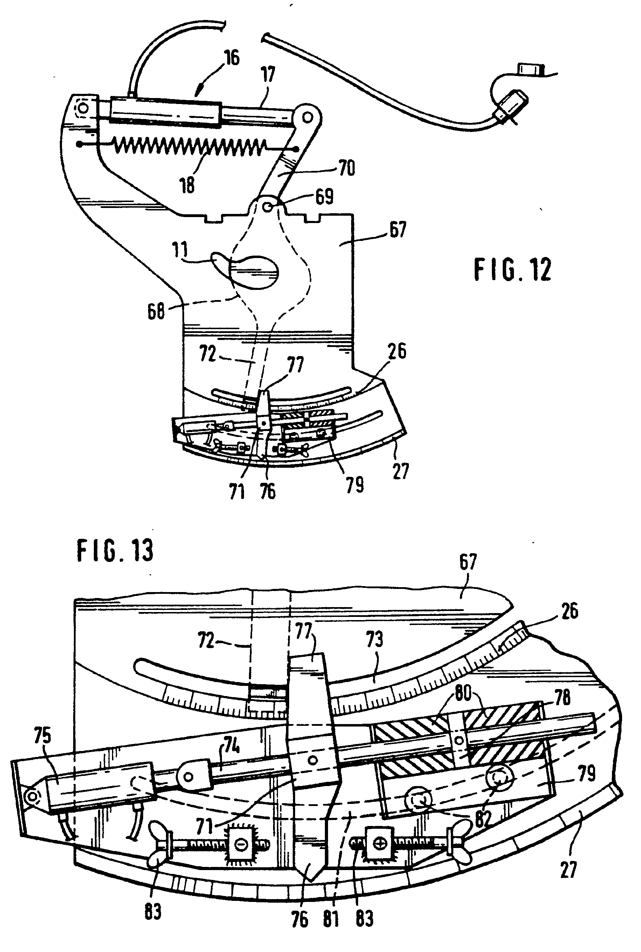

Die Dosiereinheit gemäß der Fig. 12 und 13 ist ebenfalls unter den Behälterteilen des Vorratsbehälters 4 anzuordnen. Diese Dosiereinheit weist die Bodenplatte 67 auf. In der Bodenplatte 67 befindet sich die Auslauföffnung 11. Unterhalb der Bodenplatte 67 ist vor der Auslauföffnung 11 der Schieber 68 an dem Bolzen 69 angeordnet. Der Schieber 68 weist den Bedienungshebel 70 auf, der über den Bolzen 69 hinausragt. Zwischen dem Bolzen 69 und der Bodenplatte 67 ist das erste Stellglied 16, welches den Hydraulikzylinder 17 und die Zugfeder 18 aufweist, angeordnet. Weiterhin ist an der Bodenplatte 67 ein zweites Stellglied 71 für die Einstellung des Grundausbringmengenwertes sowie eines kleineren und eines größeren Ausbringmengenwertes pro Flächeneinheit angeordnet. Dieses zweite Stellglied 71 wirkt mit dem Bedienungshebel 72 zusammen. Der Bedienungshebel 72 weist eine Abkantung auf, die durch ein in der Bodenplatte 67 angeordnetes Langloch 73 ragt. In diesem Bereich des Langloches 73 ist die Einstellskala 24 mit linearer Teilung angeordnet.

Das zweite Stellglied 71 für die Hin- und Herbewegung des Schiebers 68 weist eine verlängerte Schubstange 74 eines Hydraulikzylinders 75 auf. Auf dieser Schubstange 74 ist ein Zeiger 76 mit einem Anschlagelement 77 für den Bedienungshebel 72 des Schiebers 68 angeordnet. Weiterhin ist auf dieser Schubstange 74 ein Arretierungselement 78 befestigt. Dieses Arretierungselement 78 wirkt mit in einem Rahmen 79 angeordneten elastischen Elementen 80 zusammen, die im Rahmen 79 beidseitig des Arretierungselementes 78 angeordnet sind. Der Rahmen 79 ist mit den elastichen Elementen 80 innerhalb des Langloches 81, welches sich in der Bodenplatte 67 befindet, einstellbar mit den Klemmschrauben 82 befestigt. Weiterhin ist an der Bodenplatte 67 eine zweite Einstellskala 27 mit prozentualer Teilung angebracht. Ein Zeiger 76 wirkt mit der Einstellskala 27 zusammen. Weiterhin sind an dem Rahmen 79 noch die Einstellschrauben 83 angeordnet, die jeweils die kleinere und größere Ausbringmenge exakt festlegen. Durch die Anordnung des zweiten Stellgliedes 71 oberhalb der Bodenplatte wird der Raum zwischen der Bodenplatte und der darunter angeordneten Schleuderscheibe nicht eingeschränkt, so daß das Auswechseln bzw. der Austausch der Schleuderscheiben nicht behindert wird.

Die Einstellung der Ausbringmengen bei dieser Dosiereinheit geschieht folgendermaßen :

Zunächst wird der Rahmen 79 so eingestellt, daß der an dem Bedienungshebel 72 des Schiebers 68 angeordnete Zeiger auf den entsprechenden Wert der Einstellskala 26 zeigt, der aus einer Streutabelle entnommen worden ist. In dieser Position wird dann der Rahmen 79 mittels der Klemmschrauben 82 fixiert. Wenn der Bedienungshebel 72 des Schiebers 68 in dieser Position an dem Anschlag 77 anliegt und wenn der Zylinder 75 drucklos geschaltet ist, nimmt der Schieber 68 die Grundeinstellung ein ; d.h. in dieser Stellung wird die Grundausbringmenge pro Flächeneinheit ausgebracht.

Der Bedienungshebel 72 des Schiebers 68 liegt an dem Anschlag 77 an, wenn der Schieber 68 sich in seiner Öffnungsstellung befindet. Hierzu wird dann das Steuergerät der Schlepperhydraulikanlage, an dem der Hydraulikzylinder 17 angeschlossen ist, drucklos geschaltet. In dieser Stellung des Steuergerätes zieht die Zugfeder 18 den Schieber 688 in seine Öffnungsstellung gegen den Anschlag 77. Wenn der Zylinder 75 drucklos geschaltet ist, fixieren die elastischen Elemente 80 den Anschlag 77 in seiner Grundeinstellung. Ausgehend von dieser Grundeinstellung lassen sich noch eine kleinere und eine größere Ausbringmenge genau einstellen. Diese kleinere und größere Ausbringmenge wird durch die Einstellschrauben 83 genau bestimmt, indem der Zeiger 76 jeweils an diesen Einstellschrauben zur Anlage kommt. Während des Ausbringvorganges und der Feldüberfahrt kann der Schlepperfahrer mittels des Hydraulikzylinders 75 die Ausbringmenge pro Flächeneinheit verändern. Der Hydraulikzylinder ist über Hydraulikschläuche an die Schlepperhydraulikanlage des den Anbauschleuderstreuer tragenden Schleppers angeschlossen und über ein Steuergerät zu betätigen. Wenn der Hydraulikzylinder 75 über das Steuergerät drucklos geschaltet ist, befindet sich der Anschlag 77 in seiner Mittelstellung und bestimmt somit die Grundausbringmenge pro Flächeneinheit. Am Feldanfang betätigt der Landwirt sein Steuergerät, so daß der Hydraulikzylinder 17 des ersten Stellgliedes 16 drucklos geschaltet wird. Sofort zieht die Zugfeder 18 den Schieber 68 in seine Öffnungsstellung, so daß der Bedienungshebel 72 an dem Anschlaghebel 77 zur Anlage kommt Wenn nun während des Ausbringvorganges die Ausbringmenge pro Flächeneinheit vergrößert werden soll, so betätigt der Landwirt das dem Hydraulikzylinder 75 zugeordnete Steuergerät, so daß der Anschlag 77 nach rechs bewegt wird. Da der Schieber durch die Zugfeder 18 gegen den Anschlag 77 gezogen wird, schwenkt auch der Schieber 68 nach rechts, so daß er eine größere Öffnungsweite der Auslauföffnung 11 freigibt. Wenn nun wieder die Grundausbringmenge ausgebracht werden soll, so wird der Hydraulikzylinder 75 über das entsprechende Steuergerät drucklos geschaltet, so daß die elastischen Elemente 80 den Anschlag wieder in seine Grundstellung zurückdrücken. Falls nun eine kleinere Ausbringmenge Material pro Flächeneinheit ausgebracht werden soll, so wird wiederum das dem Hydraulikzylinder 75 zugeordnete Steuergerät betätigt, so daß der Anschlag 77 nach rchts und somit auch der Schieber 68 nach rechts bewegt wird. Die Öffnungsweite der Auslauföffnung 11 wird verkleinert. Somit wird eine kleinere Ausbringmenge Material pro Flächeneinheit ausgebracht. Wenn nun aufgrund der Einsatzbedingungen die Grundausbringmenge Material pro Flächeneinheit ausgebracht werden soll, so wird der Hydraulikzylinder 75 über das ihm zugeordnete Steuergerät drucklos geschaltet, so daß die elastischen Elemente 80 den Anschlag 77 wiederin seine Grundstellung zurückdrücken, so daß der Schieber 68 wieder seine Grundöffnungssstellung einnehmen kann. Am Feldende wird über das dem ersten Stellglied 16 zugeordnete Steuergerät der Hydraulikzyliner 27 betätigt, so daß der Schieber 68 in seine Schließstellung gebracht wird und die Auslauföffnung 11 somit verschließt.

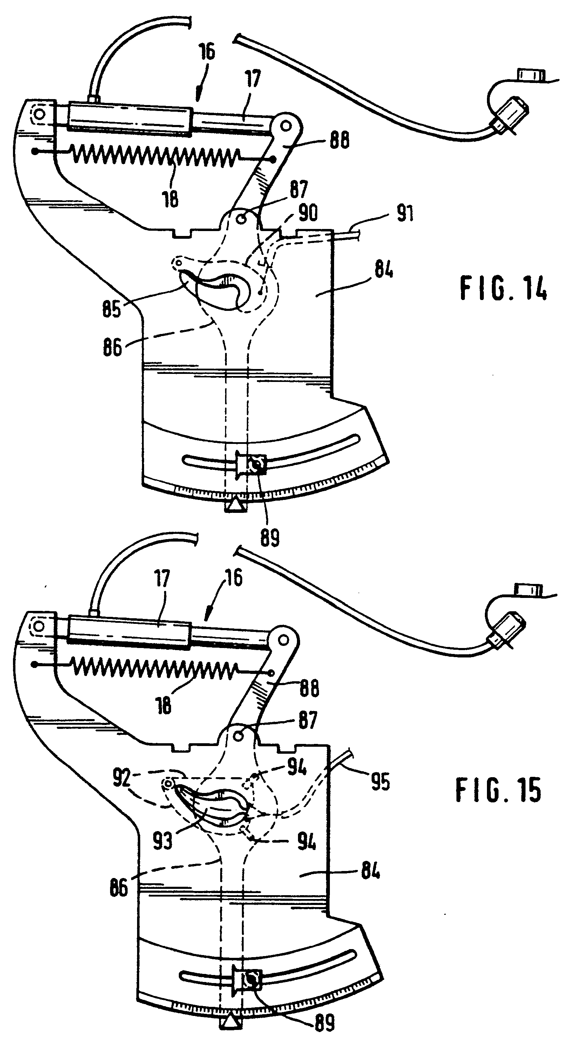

Die Dosiereinheit gemäß Fig 14 ist ebenfalls in einfacher Weise unter den Behälterteilen 5 des Vorratsbehälters 4 des Anbauschleuderstreuers anzuordnen. Diese Dosiereinheit weist die Bodenplatte 84 mit einer Auslauföffnung 85 auf. Unter der Bodenplatte 84 ist der Schieber 86 an einem Bolzen 87 angeordnet. Der Schieber 86 weist den über den Bolzen 87 hinausragenden Bedienungshebel 88 auf. Zwischen dem Bedienungshebel 88 und der Bodenplatte 84 ist das erste Stellglied 16 angeordnet, das den Hydraulikzylinder 17 und die Zugfeder 18 aufweist. Über das erste Stellglied 16 wird der Schieber 86 jeweils in seine Schließ- bzw. Öffnungsstellung gebracht. Die Öffnungsstellung des Schiebers 86 wird durch ein an der Bodenplatte 84 einstellbar angeordnetes Anschlagelement 89 bestimmt.

Zwischen der Bodenplatte 84 und dem Schieber 86 ist seitlich der Auslauföffnung 85 ein zweiter, als Blendenelement ausgebildeter Schieber 90 angeordnet. Dieses Blendenelement 90 ist über das als Bowdenzug 91 usgebildetes zweites Stellglied zu verschwenken. Das Blendenelement 90 kann drei verschiedene, durch nicht dargestellte Anschläge, bestimmte Stellungen einnehmen, so daß durch Verstellen des Blendenelementes 90 eine Grundausbringmenge Material pro Flächeneinheit sowie eine kleinere und eine größere Ausbringmenge Material pro Flächeneinheit bei jeder Stellung des Schiebers 86 über den Bowdenzug 91 einzustellen sind.

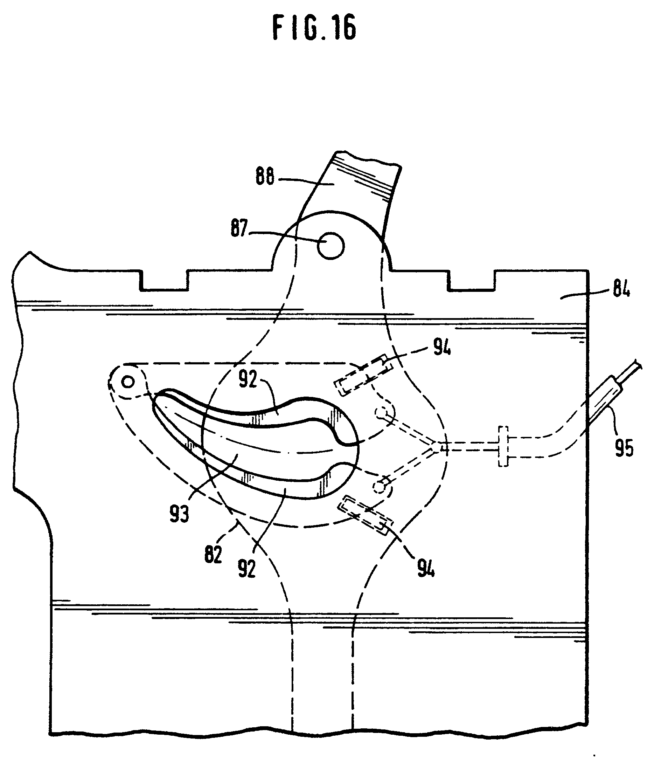

Die Dosiereinheit gemäß den Fig. 15 und 16 unterscheidet sich von der Dosiereinheit gemäß der Fig. 14 durch die Anordnung der Blendenelemente 92 beidseits der Auslauföffnung 93. Entsprechend ihrer jeweiligen Einstellung decken die Blendenelemente 92 jeweils einen entsprechenden Teil der Auslauföffnung 93 beidseitig ab. An der Bodenplatte 84 sind in dem Bereich der Blendenelemente 92 die einstellbaren Anschläge 94 angeordnet. Jedem Blendenelement 92 ist ein Anschlag 94 zugeordnet. Die Anschläge 94 bestimmen drei Positionen der Blendenelemente 92 jeweils exakt. Die Positionen sind die Grundöffnungsstellung sowie eine Minimal- und eine Maximaleinstellung. Die Blendenelemente 92 sind gemeinsam über das an ihnen angeschlossene zweite Stellglied in Form eines Bowdenzuges 95 verstellbar. Über die Verstellung der Blendenelemente 92 ist die Ausbringmenge pro Flächeneinheit zu verändern, ohne daß über das erste Stellglied 16 der erste Schieber 68 verstellt wird. Mit dem ersten Stellglied 16 wird der Schieber 68 ausschließlich nur in seine Schließstellung bzw. Öffnungsstellung bewegt, wobei die Öffnungsstellung des Schiebers 86 von dem Anschlag 89 bestimmt wird. Durch die gleichzeitige Verstellung der beiden Blendenelemente 92 bleibt die Linie, auf der sich der Flächenschwerpunkt der jeweiligen Öffnungsweite bei unterschiedlichen Öffnungsstellungen des Schiebers 86 verschiebt, immer erhalten. Hierdurch wird immer die gleiche Lage des Streufächers beibehalten ; der Mengeneffekt tritt nicht auf.

Die Ausführung der Fernbedienungsvorrichtung ist nicht auf die in den Ausführungsbeispielen beschriebenen Ausführungsformen beschränkt. Die Stellglieder der Fernbedienungsvorrichtungen können als Bowdenzüge, als hydraulische Hubzylinder, als elektrische Hubzylinder, als elektrische Stellmotore etc. ausgebildet sein.

Es soll noch darauf hingewiesen werden, daß die Anordnung der Einstellskalen an den Bodenplatten sehr große Vorteile hat. Hierdurch ist es möglich, daß die Schieber bereits vor der Montage der Bodenplatten an die Vorratsbehälter exakt eingestellt bzw. einjustiert werden können. Die Toleranzen zwischen den Schiebern und dem Rahmen bzw. Vorratsbehälter wirken sich nicht auf die exakte Einstellung der Schieber aus. Weiterhin ist es in vorteilhafter Weise möglich, daß der jeweilige Dosiermechanismus jeweils genau einjustiert werden kann und somit getrennt von der Maschine versandt und verpackt werden kann. Auch ist keine besondere neue Einjustierung zwischen den Schiebern und der Maschine erforderlich, wenn die verschiedenen Dosiermechanismen jeweils an den Vorratsbehälter angeordnet werden. Jeder Dosiermechanismus ist komplett abzunehmen und braucht nicht auf Skalen, die sich an der Maschine befinden, eingestellt zu werden.

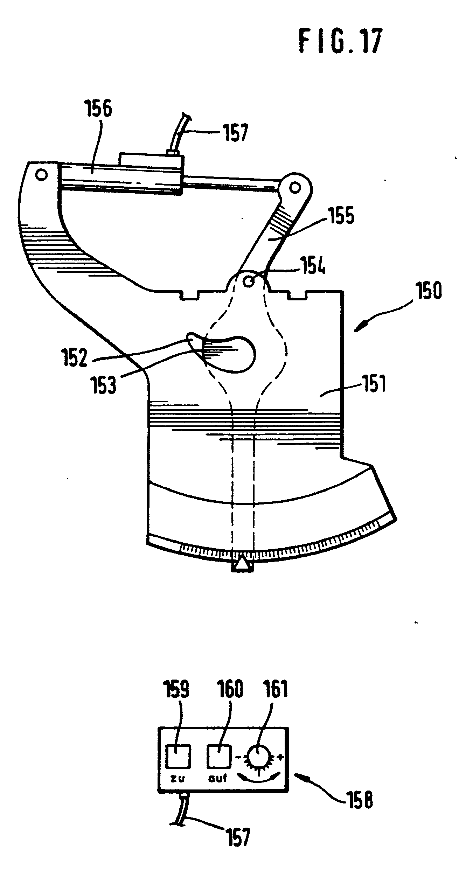

Die Dosiereinheit 150 gemäß Fig. 17 ist mittels Schnellverschlüsse unter einem trichterförmigen Teil eines Vorratsbehälters eines nicht dargestellten Schleuderstreuers, der zwei trichterförmige Behälterteile aufweist, wobei sich zwei Dosiereinheiten 150 nebeneinander, befinden angeordnet sind. Unter jeder Dosiereinheit 150 ist eine nicht dargestellte als Schleuderscheibe ausgebildete Verteileinrichtung angeordnet, so daß der nicht dargestellte Schleuderstreuer zwei nebeneinander angeordnete Schleuderscheiben aufweist, die das über die Dosiereinheit 150 dosierte Material in Breitverteilung über die Bodenoberfläche verteilen. Die Dosiereinheit 150 weist die Bodenplatte 151 auf, mit der der untere Teil des trichterförmigen Teiles des nicht dargestellten Vorratsbehälters verschlossen wird. Die Bodenplatte 151 ist als Dosierorgan ausgebildet. In jeder Bodenplatte 151 befindet sich jeweils eine Auslauföffnung 152, deren Öffnungsweite durch unter der Bodenplatte 151 und vor der Auslauföffnung 152 angeordnete Schieber 153 eingestellt werden kann. Der Schieber 153 ist auf dem an der Bodenplatte 151 angebrachten Bolzen 154 gelagert. Der Schieber 153 weist einen nach vorn über den Bolzen 154 hinausragenden Bedienungshebel 155 auf. Zwischen dem Bedienungshebel 155 und dem Schieber 153 ist ein elektrischer Hubzylinder 156 als einzelnes Stellglied einer Fernbedienungsvorrichtung angeordnet. Über den elektrischen Hubzylinder läßt sich die Öffnungsweite der Auslauföffnung 152 einstellen, indem der Schieber 153 verstellt werden kann. Die Fernbedienungsvorrichtung weist außerdem ein Kabel 157 auf, mit dem der elektrische Hubzylinder 156 mit Betätigungselementen 158 der Fernbedienungsvorrichtung verbunden ist. Die Betätigungselemente 158 sind in einem Schaltkasten angeordnet, der auf dem Schlepper, der den Schleuderstreuer zieht, sich befindet.

Der elektrische Hubzylinder 156 besitzt eine schnelle und langsame Betätigungsstufe. Hierzu weist das Betätigungselement 158 einen Schalter 159 und einen Schalter 160 auf, über die der Schieber 153 schnell verstellt werden kann. Bei Betätigen des Schalters 159 wird der Schieber 153 so verstellt, daß die Auslauföffnung 152 verschlossen wird. Durch Betätigen des Schalters 160 wird der Schieber über den hydraulischen Hubzylinder 156 sehr schnell in seine eingestellte Öffnungsstellung gebracht. Des weiteren weist das Betätigungselement 158 einen Drehschalter 161 auf, mit dem über den elektrischen Hubzylinder 156 der Schieber 153 sich sehr langsam verstellen läßt, so daß der Öffnungsquerschnitt der Auslauföffnung 152 sich sehr langsam und kontinuierlich verändern läßt. Hierdurch können, ausgehend von dem Grundausbringmengenwert, der durch Betätigen des Schalters 160 eingestellt wird, die Ausbringmengen vergrößert und verkleinert werden.

Der nicht dargestellte Schleuderstreuer weist zwei Dosiereinheiten 150 auf, denen jeweils eine Schleuderscheibe zugeordnet ist. Jeder Dosierenheit 150 ist ein Bedienungselement 158 zugeordnet, so daß bei jeder Dosiereinheit 150 unabhängig voneinander jeweils unterschiedliche Ausbringmengen über den jeweiligen Drehschalter 161 eingestellt werden können. Des weiteren ist es möglich, auch die Schieber 153 unabhängig voneinander schnell in ihre Öffnungs- bzw. Schließstellung zu bringen, so daß die Arbeitsbreite bei einem Schleuderstreuer mit zwei Schleuderscheiben auf die Hälfte zu reduzieren ist. Darüberhinaus ist es auch möglich, durch die unabhängige langsame Veränderung der Ausbringmenge über die Drehschalter 161 für die linke Streuseite eine andere Streumenge als für die rechte Streuseite einzustellen.

Weiterhin ist es über die Schalter 159 und 160 möglich, jeweils für jede Dosiereinheit 150 den Schieber 153 schlagartig zum Schließen und Öffnen der Auslauföffnung zu bewegen, während zum Einstellen einer größeren und einer kleineren Ausbringmenge gegenüber einer Grundausbringmenge über den Schalter 161 und der langsamen Stufe des elektrischen Hubzylinders 156 die Streumenge stufenlos und langsam sowie kontinuierlich zum Einstellen einer kleineren und einer größeren Menge gegenüber der Grundausbringmenge von dem einen zum anderen Ausbringmengenwert möglich ist.

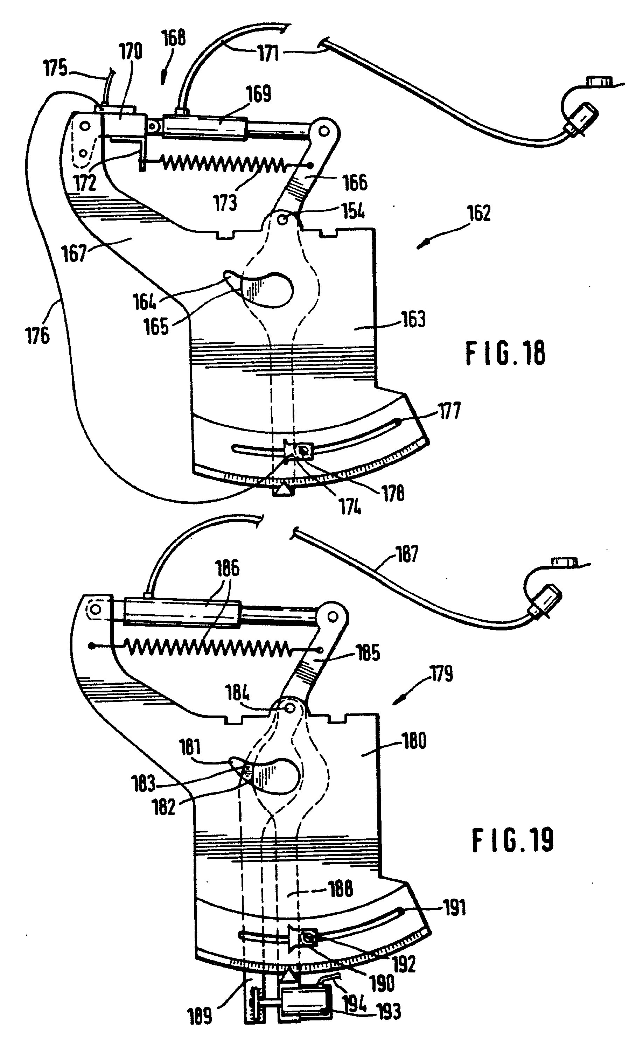

Die Dosiereinheit 162 gemäß Fig. 18 ist ebenfalls, wie die Dosiereinheit 150 gemäß Fig. 1, mittels Schnellverschlüssen unter einem trichterförmigen Teil eines Vorratsbehälters eines nicht dargestellten Schleuderstreuers, der vorzugsweise zwei trichterförmige Behälterteile aufweist, angeordnet. Unter jeder Dosiereinheit 162 ist jeweils eine nicht dargestellte und als Schleuderscheibe ausgebildete Verteileinrichtung angeordnet, so daß der nicht dargestellte Schleuderstreuer zwei nebeneinander angeordnete Schleuderscheiben aufweist, die das über die Dosiereinheit 162 dosierte Material in Breitenverteilung über die Bodenoberfläche verteilen. Die Dosiereinheit 162 weist die Bodenplatte 163 auf, mit der der untere Teil des trichterförmigen Teiles des nicht dargestellten Vorratsbehälters verschlossen wird. Die Bodenplatte 162 ist ebenfalls als Dosiereinheit ausgebildet. In jeder Bodenplatte 163 befindet sich jeweils eine Auslauföffnung 164, deren Öffnungsweite durch einen unter der Bodenplatte 163 und vor der Auslauföffnung 164 angeordneten Schieber 165 eingestellt werden kann. Der Schieber 165 ist auf einem an der Bodenplatte 163 angebrachten Bolzen 154 gelagert. Der Schieber 165 weist einen nach vorn über den Bolzen 154 hinausragenden Bedienungshebel 166 auf. Zwischen dem Bedienungshebel 166 und einem nach oben ragenden Arm 167 der Bodenplatte 163 der Dosiereinheit 162 ist eine Stellgliedanordnung 168 der Fernbedienungsvorrichtung angeordnet. Die Stellgliedanordnung 168 besteht aus einem ersten Stellglied in Form eines Hydraulikzylinders 169 und einem zweiten Stellglied in Form eines elektrischen Getriebemotors 170. Der Hydraulikzylinder 169 und der elektrische Getriebemotor 170 sind die Stellglieder der Stellgliedanordnung 168, mit der sich der Schieber 166 schnell bzw. langsam verstellen läßt. Der Hydraulikzylinder 169 und der elektrische Getriebemotor 170 sind für die Betätigung des Schiebers 165 in Reihe hintereinander geschaltet. Der Hydraulikzylinder 169 ist über einen Hydraulikschlauch 171 an die Schlepperhydraulikanlage angeschlossen. Der Hydraulikzylinder 169 ist als einfach wirkender Hydraulikzylinder ausgebildet und daher ist zwischen dem Bedienungshebel 166 und einem an dem Getriebemotor 170 angeflanschten Winkel 172 eine Zugfeder 173 angeordnet. Über den hydraulikzylinder 169 bzw. durch die Zusammenwirkung mit der Zugfeder 17 kann der Schieber 165 schlagartig in seine Öffnungsstellung, die durch den Anschlag 174 bestimmt wird, gebracht werden, wenn der Hydraulikzylinder drucklos geschaltet wird, so daß dann die Zugfeder 173 den Schieber gegen den Anschlag 174 zieht. Ebenfalls kann die Auslauföffnung über den Schieber 175 schlagartig verschlossen werden, indem der Hydraulikzylinder 169 mit Druck beaufschlagt wird. Die Stellgliedanordnung 168 sowie die Kabel 171 und 175 stellen die Fernbedienungsvorrichtung dar.

Über den Getriebemotor 170, der über ein Kabel 175 mit einem auf dem Schlepper angeordneten elektrischen Betätigungselement verbunden ist, kann der Schieber 165 langsam verstellt werden. Des weiteren ist der Getriebemotor 170 bzw. die auf dem Schlepper angeordnete elektrische Betätigungsvorrchtung über ein Kabel 176 mit dem Anschlag 174 verbunden. Der Anschlag 174 ist in einem Langloch 177 mittels einer Klemmschraube 178 so einzustellen, daß bei Anlage des Schiebers 165 an den Anschlag 174 die Grundausbringmenge eingestellt ist. Um nun jedoch auch noch größere Ausbringmengen über den elektrischen Getriebemotor 170 einstellen zu können, weist der Anschlag 174 ein elektrisch bewgbares Anschlagteil auf, selches über einen nicht dargestellten Magneten betätigt wird. Dieser Magnet ist über das Kabel 176 mit dem Getriebemotor 170 bzw. dem elektrischen Betätigungselement, welches auf dem Schlepper angeordnet ist, verbunden. Dies über den Hubmagneten bewgbare Anschlagelement wird zum Zwecke des Öffnens des Schiebers 165 über den Hydraulikzylinder 169 bzw. die Zugfeder 174, damit der Schieber in die Grundeinstellung gebracht werden kann, in die Anschlagstellung für eine kurze Zeit gebracht. Nach dieser kurzen Zeit, etwa 3 bis 4 Sekunden wird über eine elektriche Schaltung, die sich bei dem Getriebemotor 10 bzw. in dem Betätigungselement, welches auf dem Schlepper angeordnet ist, befindet, in eine Außerbetriebsstellung gebracht, so daß über den Getriebemotor 170 der Schieber 165 über den Anschlag hinaus bewegt werden kann, so daß auch größere Ausbringmengen einzustellen sind.

Somit kann also über den Getriebemotor 170 der Schieber 165 derart bewegt werden, daß sehr langsam eine größere bzw. eine kleinere Ausbringmenge, ausgehend von einem Grundausbringmengenwert, eingestellt werden kann. Erwähnt sei hierbei noch, daß es bei dieser Ausführungsform wichtig ist, daß das dem hydraulikzylinder 169 zugeordnete hydraulische Schaltventil sofort, nachdem der Schieber 165 seine Grundeinstellung eingenommen hat, wieder in seine Neutralstellung geschaltet wird, so daß kein weiteres Öl aus dem hydraulikzylinder 169 über den Hydraulikschlauch 171 zurückfließen kann. Denn wenn das bewgbare Anschlagelement des Anschlages 174 in seine Außerbetriebsstellung bewegt worden ist, bestimmt der Hydraulikzylinder 169 die Grundeinstellung des Schiebers 165. Die Betätigungselemente der Stellgliedanordnung 168, die auf dem Schlepper angeordnet sind, weisen Anzeigelemente auf, so daß der Schlepperfahrer jederzeit feststellen kann, in welcher Position der Schieber 165 sich befindet ; d.h. er kann anhand dieser Anzeigeelemente feststellen, ob beispielsweise die Grundausbringmenge, eine größere oder kleinere Menge ausgebracht wird. Hierzu weist der Getriebemotor 170 eine Nullstellung auf, die ebenfalls auf den Anzeigeelementen angezeigt wird, so daß eine ausreichend genaue Anzeige erfolgen kann.

Die Dosiereinheit 179 gemäß Fig. 19 weist die Bodenplatte 180 auf. In der Bodenplatte 180 befindet sich eine Auslauföffnung 181. Unter der Bodenplatte 180 und vor der Auslauföffnung 181 sind ein erster Schieber 182 und ein zweiter Schieber 183 angeordnet, so daß über die Schieber 182 und 183 die Öffnungsweite der Auslauföffnung 181 eingestellt werden kann. Die beiden Schieber 182 und 183 sind auf einem an der Bodenplatte 180 angeordneten Bolzen 184 schwenkbar angeordnet. Direkt unter der Bodenplatte 180 befindet sich der Schieber 182, so daß sich der Schieber 182 zwischen der Bodenplatte 180 und dem Schieber 183 befindet. Ein Bedienungshebel 185 des Schiebers 182 ragt nach vorn über den Bolzen 184 hinaus. An diesem über den Bolzen 184 hinausragenden Bedienungshebel 185 ist ein als Teil der Fernbedienungsvorrichtung ausgebildetes erstes Stellglied 186 angeordnet. Dieses erste Stellglied 186 ist als einfach wirkender Hydraulikzylinder mit einer Zugfeder ausgebildet. Das erste Stellglied 186 ist zwischen dem Hebel 185 und der Bodenplatte 180 angeordnet. Der Hydraulikzylinder des ersten Stellgliedes 186 ist über einen Hydraulikschlauch 187 an eine Hydraulikanlage des Schleppers angeschlossen. Somit kann der Hydraulikzylinder 186 vom Schleppersitz aus über die auf dem Schlepper angeordneten Steuergeräte betätigt werden. Der Schieber 182 weist auf seiner dem Bedienungshebel 185 abgewandten Seite ein Verlängerungsstück 188 auf. Der Schieber 183 besitzt ebenfalls einen Bedienungshebel 189, der sich in gleicher Richtung wie das Verlängerungsstück 188 des Schiebers 182 erstreckt. An der Bodenplatte 180 ist ein mechanisch einstellbarer Anschlag 190 in einem Langloch 191 mittels einer Klemmschraube 192 einstellbar angeordnet. Dieser Anschlag 190 bestimmt die Grundöffnungsstellung der Schieber 182 bzw. 183. Zwischen dem Verlängerungsstück 188 und dem Bedienungshebel 189 ist als zweites Stellglied der Fernbedienungsvorrichtung ein elektrischer Getriebemotor 193 angeordnet, der über ein Kabel 194 mit einer auf dem Schlepper angeordneten elektrischen Betätigungsvorrichtung verbunden ist. Über das den Hydraulikzylinder und die Zugfeder aufweisende erste Stellglied 186 sind die Schieber 182 und 183 schlagartig zu bewegen. Durch Drucklosschalten des Hydraulikzylinders des ersten Stellgliedes 186 zieht die Zugfeder des ersten Stellgliedes 186 den Bedienungshebel 185 des Schiebers 182 und somit die beiden Schieber 182 und 183 in ihre Grundöffnungsstellung, so daß das Verlängerungsstück 188 an den Anschlag 190 zur Anlage kommt. Der Anschlag 190 bestimmt die Grundöffnungsstellung des Schiebers 182. bzw. des Schiebers 183. Über den elektrischen Getriebemotor 183 läßt sich der Schieber 183 gegenüber dem Schieber 182 verstellen, so daß, ausgehend von einem Grundausbringmengenwert, langsam und kontinuierlich eine größere und eine kleinere Ausbringmenge während der Fahrt vom Schleppersitz aus einzustellen sind. Die Verstellung von der einem Menge zu der anderen Ausbringmenge erfolgt über den Getriebemotor 183 stufenlos sowie langsam und kontinuierlich. Somit sind also die Schieber 182 und 183 über das erste Stellglied 186 schlagartig bzw. mit einer schnellen Geschwindigkeit zu bewgen, während über den Getriebemotor 193 als zweites Stellglied der Schieber 183 mit einer langsamen Geschwindigkeit hin- und herbewegt werden kann.

Bei Schleuderstreuern, bei denen zwei Dosiereinheiten 179 vorgesehen sind, sind die Schieber jeder Dosiereinheit 179 jeweils unabhängig voneinander zu betätigen, so daß unabhängig voneinander für jede Dosiereinheit eine andere Ausbringmenge eingestellt werden kann.

**Patentansprüche**

1. Schleuderstreuer, vorzugsweise Anbauschleuderstreuer, insbesondere für gekörnte Düngemittel, mit einem Vorratsbehälter (4) und einer Verteileinrichtung mit zumindest zwei angetriebenen Verteilorganen (9), denen die auszubringenden Materialien über zumindest je eine mit zumindest einer Schieberanordnung verschließbare und auf verschiedene Öffnungsweiten einstellbare Auslauföffnung zuführbar sind, wobei die jeweilige Schieberanordnung mit Hilfe einer Fernbedienungsvorrichtung während der Fahrt in die Schließstellung und in eine Grundöffnungsstellung sowie in zwei zusätzliche Öffnungsstellungen verstellbar ist und die Öffnungsweiten der jeweiligen Auslauföffnung in der einen zusätzlichen Öffnungsstellung größer und in der anderen kleiner als in der Grundöffnungsstellung sind, **dadurch gekennzeichnet,** daß die Fernbedienungsvorrichtung (16, 19, 28, 37, 53, 54, 56, 64, 71, 74, 75, 91, 95 ; 156, 157 ; 168, 171, 175 ; 186, 187, 193, 194) eine schnellere Betätigungsstufe, ausgebildet zum Verstellen der Schieberanordnung (12, 13 ; 60 ; 68 ; 86, 90 ; 82, 92 ; 153 ; 165 ; 182, 183) in die Schließ- und in die Grundöffnungsstellung, sowie eine langsamere Betätigungsstufe, ausgebildet zum Verstellen der Schieberanordnung (12, 13 ; 60 ; 68 ; 86, 90 ; 82, 92 ; 153 ; 165 ; 182 ; 183) in die zusätzlichen Öffnungsstellungen, besitzt.

2. Schleuderstreuer nach Anspruch 1, **dadurch gekennzeichnet,** daß die Fernbedienungsvorrichtung (91 ; 95) als Bowdenzug (91 ; 95) ausgebildet ist.

3. Schleuderstreuer nach Anspruch 1 oder 2, **dadurch gekennzeichnet,** daß die Fernbedienungsvorrichtung (16, 19, 28, 37, 53, 54, 56, 64, 71, 74, 75, 91, 95 ; 156, 157 ; 168, 171, 175 ; 186, 187, 193, 194) eine Stellgliedanordnung (16 ; 22 ; 37 ; 54 ; 64 ; 74, 75 ; 91, 95 ; 156 ; 168 ; 186, 193) mit der schnelleren und der langsameren Betätigungsstufe umfaßt.

4. Schleuderstreuer nach Anspruch 3, **dadurch gekennzeichnet,** daß die Stellgliedanordnung (156) ein einzelnes Stellglied (156) umfaßt.

5. Schleuderstreuer nach Anspruch 4, **dadurch gekennzeichnet,** daß das einzelne Stellglied (156) zur Festlegung der Grundöffnungsstellung und der zusätzlichen Öffnungsstellungen ausgebildet ist.

6. Schleuderstreuer nach Anspruch 3, **dadurch gekennzeichnet,** daß die Stellgliedanordnung (16 ; 22 ; 37 ; 54 ; 64 ; 74, 75 ; 91, 95 ; 168 ; 186, 193) ein erstes Stellglied (16 ; 169, 173 ; 186) mit der schnelleren Betätigungsstufe und ein zweites Stellglied (22 ; 37 ; 54 ; 64 ; 74, 75 ; 91, 95 ; 170 ; 193) mit der langsameren Betätigungsstufe umfaßt.

7. Schleuderstreuer nach Anspruch 6, **dadurch gekennzeichnet,** daß das erste Stellglied (169, 173) und das zweite Stellglied (170) in Reihe geschaltet sind.

8. Schleuderstreuer nach wenigstens einem der Ansprüche 3 bis 7, **dadurch gekennzeichnet,** daß die Stellgliedanordnung (156 ; 168) zwischen der Schieberanordnung (153 ; 165) und einer die Auslauföffnung (152 ; 164) enthaltenden Bodenplatte (151 ; 167) angeordnet ist.

9. Schleuderstreuer nach wenigstens einem der Ansprüche 1 bis 8, **dadurch gekennzeichnet,** daß die Schieberanordnung (47 ; 60 ; 68 ; 156 ; 165) einen einzelnen Schieber (47 ; 60 ; 68 ; 156 ; 165) umfaßt.

10. Schleuderstreuer nach wenigstens einem der Ansprüche 1 bis 8, **dadurch gekennzeichnet,** daß die Schieberanordnung (12, 13 ; 86, 90, 92 ; 182, 183) einen ersten Schieber (12 ; 86 ; 182) und einen zweiten Schieber (13 ; 90 ; 92 ; 183) umfaßt, die beide zur Festlegung der Öffnungsweite der Auslauföffnung (11 ; 85 ; 93 ; 181) zusammenwirken, und daß beide Schieber (12, 13 ; 86, 90, 92 ; 182, 183) in die Grundöffnungsstellung und einer der Schieber (13 ; 90 ; 92 ; 183) in die zusätzlichen Öffnungsstellungen verstellbar sind bzw. ist.

11. Schleuderstreuer nach Anspruch 10, **dadurch gekennzeichnet,** daß das erste Stellglied (16 ;186) an den ersten Schieber (12 ; 182) angeschlossen ist und das zweite Stellglied (22 ; 37 ; 193) beide Schieber (13 ; 82, 183) miteinander verbindet.

12. Schleuderstreuer nach Anspruch 10 oder 11, **dadurch gekennzeichnet,** daß das erste Stellglied (16 ; 186) zwischen dem ersten Schieber (12 ; 86 ; 182) und der Bodenplatte (6 ; 84 ; 180) angeordnet ist.

13. Schleuderstreuer nach wenigstens einem der Ansprüche 6 bis 12, **dadurch gekennzeichnet,** daß das erste Stellglied mit der schnelleren Betätigungsstufe als hydraulischer Hubzylinder ausgebildet ist.

14. Schleuderstreuer nach Anspruch 13, **dadurch gekennzeichnet,** daß das erste Stellglied als ein in Richtung der Schließstellung der Schieberanordnung (12, 13 ; 47 ; 60 ; 68 ; 86, 90, 92 ; 165 ; 182, 183) wirkender hydraulische Hubzylinder (16 ; 169 ; 186) und als eine in Richtung der Öffnungsstellung der Schieberanordnung (12, 13 ; 47 ; 60 ; 68 ; 86, 90, 92 ; 165 ; 182, 183) wirkende Zugfeder (18 ;173 ;186) ausgebildet ist.

15. Schleuderstreuer nach wenigstens einem der Ansprüche 1 bis 14, **dadurch gekennzeichnet,** daß der Schieberanordnung (12, 13 ; 47 ; 60 ; 68 ; 86, 90, 92 ; 165 ; 182, 183) ein verstellbarer Anschlag (28 ; 50 ; 77, 78 ; 89 ; 174 ; 190) zur Festlegung der Grundöffnungsstellung zugeordnet ist.

16. Schleuderstreuer nach Anspruch 15, **dadurch gekennzeichnet,** daß der Anschlag (28 ; 89 ; 190) dem ersten Schieber (12 ; 86 ; 182) zugeordnet ist.

17. Scheuderstreuer nach wenigstens einem der Ansprüche 6-16, **dadurch gekennzeichnet,** daß das zweite Stellglied (22 ; 37 ; 54, 56, 64 ; 74, 75 ; 91 ; 95 ; 170 ; 193) mit der langsameren Betätigungsstufe zur Festlegung der zusätzlichen Öffnungsstellungen ausgebildet ist.

18. Schleuderstreuer nach wenigstens einem der Ansprüche 6 bis 17, **dadurch gekennzeichnet,** daß das einzelne und/oder das zweite Stellglied (170 ; 193) mit der langsameren Betätigungsstufe als elektrischer Stellantrieb (170 ; 193) ausgebildet ist.

19. Schleuderstreuer nach wenigstens einem der Ansprüche 4 bis 17, **dadurch gekennzeichnet,** daß das einzelne und/oder das zweite Stellglied (156) mit der langsameren und der schnelleren Betätigungsstufe als elektrischer oder hydraulischer Hubzylinder ausgebildet ist.

20. Schleuderstreuer nach wenigstens einem der Ansprüche 4 bis 17, **dadurch gekennzeichnet,** daß jedes Stellglied in Form elektrischer Hubmagnete ausgebildet ist.

21. Schleuderstreuer nach wenigstens einem der Ansprüche 1 bis 20, **dadurch gekennzeichnet,** daß der Schieberanordnung (12, 13 ; 47 ; 60 ; 68 ; 86, 92) verstellbarer Anschläge (25 ; 54 ; 64 ; 83 ; 94) zur Festlegung der zusätzlichen Öffnungsstellungen zugeordnet sind.

22. Schleuderstreuer nach wenigstens einem der Ansprüche 1 bis 21, **dadurch gekennzeichnet,** daß die den beiden Verteilorganen zugeordneten Schieberanordnungen (12, 13 ; 47 ; 60 ; 68 ; 86, 90, 92 ; 153 ; 165 ; 182, 183) mittels der jeweiligen Fernbedienungsvorrichtung (156, 157 ; 168, 171, 175 ; 186, 187, 193, 194) unabhängig voneinander in die Schließstellung, in die Grundöffnungsstellung und in die zusätzlichen Öffnungsstellungen verstellbar sind.

23. Schleuderstreuer nach wenigstens einem der Ansprüche 10 bis 22, **dadurch gekennzeichnet**, daß der erste Schieber (12 ; 86 ; 182) zwischen dem zweiten Schieber (13 ; 90, 92 ; 183) und der Auslauföffnung (11 ; 85 ; 93 ; 181) angeordnet ist.

24. Schleuderstreuer nach wenigstens einem der Ansprüche 1 bis 23, **dadurch gekennzeichnet**, daß an dem in die Grundöffnungsstellung verstellbaren Schieber (13 ; 153 ; 165 ; 182) ein Zeiger (35) und an dem Schleuderstreuer eine Skala (27) mit einer Prozentteilung angeordnet sind, und daß Zeiger und Skala zusammenwirken.

25. Schleuderstreuer nach wenigstens einem der Ansprüche 1 bis 24, **dadurch gekennzeichnet**, daß die Fernbedienungsvorrichtungen 16, 19, 28, 37, 53, 54, 56, 64, 71, 74, 75, 91, 95 ; 156, 157 ; 168, 171, 175 ; 186, 187, 193, 194) mittels auf dem den Schleuderstreuer tragenden bzw. ziehenden Schlepper angeordneten Betätigungselementen (158) betätigbar sind.

26. Schleuderstreuer nach wenigstens einem der Ansprüche 1 bis 25, **dadurch gekennzeichnet** daß wenigstens ein die Stellung der Schieberanordnung (12, 13 ; 60 ; 68 ; 86, 90 ; 82, 92 ; 153 ; 165 ; 182, 183) anzeigendes Anzeigeelement auf dem Schlepper angeordnet ist.

27. Schleuderstreuer nach Anspruch 26, **dadurch gekennzeichnet**, daß an dem wenigstens einen Anzeigeelement die Einstellung der Öffnungsweite der Auslauföffnung (11 ; 85 ; 93 ; 152 ; 164 ; 181) ablesbar ist.

## Claims

1. A centrifugal distributor, preferably a towed centrifugal distributor, particularly for granular fertilisers, with a hopper (4) and a distributing arrangement with at least two driven distributor units (9), to which the materials to be distributed can be fed through at least one outlet opening in each case which is closable by means of at least one slider arrangement, and settable to different opening widths, the respective slider arrangement being displaceable with the aid of a remote control device, during travel, into the closed position and a basic open position as well as into two additional open positions, and the opening widths of the respective outlet openings are larger in one additional open position and in the other smaller, than in the basic open position, characterised in that the remote control device (16, 19, 28, 37, 53, 54, 56, 64, 71, 74, 75, 91, 95 ; 156, 157 ; 168, 171, 175 ; 186, 187, 193, 194) has a more rapid actuating stage, designed to displace the slider arrangement (12, 13 ; 60 ; 86, 90 ; 82, 92 ; 153 ; 165 ; 182, 183) into the closed and into the basic open position, and a slower actuating stage, designed to displace the slider arrangement (12, 13 ; 60 ; 86, 90 ; 82, 92 ; 153 ; 165 ; 182, 183) into the additional open positions.

2. A centrifugal distributor according to Claim 1, characterised in that the remote control device (91 ; 95) is designed as a Bowden cable (91 ; 95).

3. A centrifugal distributor according to Claim 1 or 2, characterised in that the remote control device (16, 19, 28, 37, 53, 54, 56, 64, 71, 74, 75, 91, 95 ; 156, 157 ; 168, 171, 175 ; 186, 187, 193, 194) encompasses an actuating member arrangement (16 ; 22 ; 37 ; 54 ; 64 ; 74,75 ; 91,95 ; 156 ; 168 ; 186,193) with the more rapid and slower actuating stages.

4. A centrifugal distributor according to Claim 3, characterised in that the actuating member arrangement (156) comprises a single actuating member (156).

5. A centrifugal distributor according to Claim 4, characterised in that the single actuating member (156) is designed to fix the basic open position and the additional open positions.

6. A centrifugal distributor according to Claim 3, characterised in that the actuating member arrangement (16 ; 22 ; 37 ; 54 ; 64 ; 74,75 ; 91,95 ; 168 ; 186,193) comprises a first actuating member (16 ; 169, 173 ; 186) with the more rapid actuating stage, and a second actuating member (22 ; 37 ; 54 ; 64 ; 74,75 ; 91,95 ; 170 ; 193) with the slower actuating stage.

7. A centrifugal distributor according to Claim 6, characterised in that the first actuating member (169, 173) and the second actuating member (170) are incorporated in series.

8. A centrifugal distributor according to at least one of Claims 3 to 7, characterised in that the actuating member arrangement (156 ;,168) is located between the slider arrangement (153 ; 165) and a base plate (151 ; 167) containing the outlet opening (152 ; 164).

9. A centrifugal distributor according to at least one of Claims 1 to 8, characterised in that the slider arrangement (47 ; 60 ; 68 ; 156 ; 165) comprises a single slider (47 ; 60 ; 68 ; 156 ; 165).

10. A centrifugal distributor according to at least one of Claims 1 to 8, characterised in that the slider arrangement (12, 13 ; 86, 90, 92 ; 182, 183) comprises a first slider (12 ; 86 ; 182) and a second slider (13 ; 90 ; 92 ; 183) both of which cooperate in order to fix the opening width of the outlet opening (11 ; 85 ; 93 ; 181), and that both sliders (12, 13 ; 86, 90, 92 ; 182, 183) are displaceable into the basic open position and one of the sliders (13 ; 90 ; 92 ; 183) is displaceable into the additional open positions.

11. A centrifugal distributor according to Claim 10, characterised in that the first actuating member (16 ; 86) is connected to the first slider (12 ; 182) and the second actuating member (22 ; 37 ; 193) connects both sliders (13 ; 82, 183) together.

12. A centrifugal distributor according to Claim 10 or 11, characterised in that the first actuating member (16 ; 186) is located between the first slider (12 ; 86 ; 182) and the base plate (6 ; 84 ; 180).

13. A centrifugal distributor according to at least one of Claims 6 to 12, characterised in that the first actuating member with the more rapid actuating stage is designed as a hydraulic lift cylinder.

14. A centrifugal distributor according to Claim 13, characterised in that the first actuating member is designed as a hydraulic lift cylinder (16 ; 169 ; 186) acting in the direction of the closed position of the slider arrangement (12, 13 ; 47 ; 60 ; 68 ; 86, 90,92 ; 165 ; 182, 183), and as a draw spring (18 ; 173 ; 186) acting in the direction of the open position of the slider arrangement (12, 13 ; 47 ; 60 ; 68 ; 86, 90,92 ; 165 ; 182, 183).

15. A centrifugal distributor according to at least one of Claims 1 to 14, characterised in that there is associated with the slider arrangement (12, 13 ; 47 ; 60 ; 68 ; 86, 90,92 ; 165 ; 182, 183) a displaceable stop (28 ; 50 ; 77, 78 ;89 ; 174 ; 190) for fixing the basic open position.

16. A centrifugal distributor according to Claim 15, characterised in that the stop (28 ; 89 ; 190) is associated with the first slider (12 ; 86 ; 182).

17. A centrifugal distributor according to at least one of Claims 6 to 16, characterised in that the second actuating member (22 ; 37 ; 54, 56, 64 ; 74,75 ; 91,95; 170 ; 193) with the slower actuating stage is designed to fix the additional open positions.

18. A centrifugal distributor according to at least one of Claims 6 to 17, characterised in that the single and/ or the second actuating member (170 ; 193) with the slower actuating stage is designed as an electrical actuating drive (170 ; 193).

19. A centrifugal distributor according to at least one of Claims 4 to 17, characterised in that the single and/ or the second actuating member (156) with the slower and the more rapid actuating stages is designed as an electrical or hydraulic lift cylinder.

20. A centrifugal distributor according to at least one of Claims 4 to 17, characterised in that each actuating member is in the form of an electrical lift magnet.

21. A centrifugal distributor according to at least one of Claims 1 to 20, characterised in that there are associated with the slider arrangement (12, 13 ; 47 ; 60 ; 68 ; 86, 92) displaceable stops (25 ; 54 ; 64 ; 83; 94) for fixing the additional open positions.

22. A centrifugal distributor according to at least one of Claims 1 to 21, characterised in that the slider arrangements (12, 13 ; 47 ; 60 ; 68 ; 86,90,92 ; 153 ; 165 ; 182, 183) associated with both distributor units are displaceable, by means of the respective remote control device (156, 157 ; 168, 171, 175 ; 186, 187, 193, 194) independently of one another into the closed position, into the basic open position and into the additional open positions.

23. A centrifugal distributor according to at least one of Claims 10 to 22, characterised in that the first slider (12 ; 86 ; 182) is located between the second slider (13 ; 90, 92 ; 183) and the outlet opening (11 ; 85 ; 93 ; 181).

24. A centrifugal distributor according to at least one of Claims 1 to 23, characterised in that there are located on the slider (13 ; 153 ; 165 ; 182), which is displaceable into the basic open position, an indicator (35), and on the centrifugal distributor, a scale (27) with a percentage subdivision, and that indicator and scale operate in conjunction with one another.

25. A centrifugal distributor according to at least one of Claims 1 to 24, characterised in that the remote control devices (16, 19, 28, 37, 53, 54, 56, 64, 71, 74, 75, 91, 95 ; 156, 157 ; 168, 171, 175 ; 186, 187, 193, 194) can be actuated by actuating members (158) located on the tractor carrying or towing the centrifugal distributor.

26. A centrifugal distributor according to at least one of Claims 1 to 25, characterised in that at least one indicator member indicating the position of the slider arrangement (12, 13 ; 60 ; 68 ; 86, 90 ; 82, 92 ; 153 ; 165 ; 182, 183) is located on the tractor.

27. A centrifugal distributor according to Claim 26, characterised in that on at least one indicator member, the setting of the opening width of the outlet opening (11 ; 85 ; 93 ; 152 ; 164 ; 181) may be read off.

## Revendications

1. Distributeur centrifuge notamment distributeur centrifuge porté en particulier pour des engrais granulés, comportant un réservoir d'alimentation (4) et un dispositif de distribution avec au moins deux organes distributeurs (9), entraînés, qui reçoivent les produits à distribuer par au moins un orifice de sortie à ouverture réglable, susceptible d'être fermé et dégagé de manière réglable par un dispositif à tiroir, chaque dispositif à tiroir étant réglable par un dispositif de télécommande pendant le déplacement du tracteur, pour passer dans une position de fermeture ou une position d'ouverture de base ainsi que dans deux positions d'ouverture supplémentaires et le degré d'ouverture de l'orifice de sortie pour les ouvertures supplémentaires est augmenté ou réduit par rapport à l'ouverture pour le débit de base, distributeur caractérisé en ce que le dispositif de télécommande (16, 19, 28, 37, 53, 54, 56, 64, 71, 74, 75, 91, 95 ; 156, 157 ; 168, 171, 175 ; 186, 187, 193, 194) comporte un étage de manoeuvre rapide pour déplacer le dispositif à tiroirs (12, 13 ; 60, ; 68 ; 86, 90 ; 82 ; 92 : 153 ; 165 ; 182, 183) en position de fermeture et d'ouverture de base ainsi qu'un dispositif de manoeuvre plus lent pour régler le dispositif à tiroirs (12, 13 ; 60 ; 68 ; 86, 90 ; 82, 92 ; 153 ; 165 ; 182 ; 183) dans les positions d'ouverture supplémentaires.

2. Distributeur selon la revendication 1, caractérisé en ce que le dispositif de télécommande (91 ; 95) est un câble Bowden (91 ; 95).

3. Distributeur selon la revendication 1 ou 2, caractérisé en ce que le dispositif de télécommande (16, 19, 28, 37, 53, 54, 56, 64, 71, 74, 75, 91, 95 ; 156, 157 ; 168, 171, 175 ; 186, 187, 193, 194) comporte un dispositif à organes de réglage (16 ; 22 ; 37 ; 54 ; 64 ; 74, 75 ; 91, 95 ; 156 ; 168 ; 186 ; 193) avec un étage de commande rapide et un étage de commande lent.

4. Distributeur selon la revendication 3, caractérisé en ce que le dispositif à organes de réglage (156) comprend un seul organe de réglage (156).

5. Distributeur selon la revendication 4, caractérisé en ce que l'unique organe de réglage (156) est conçu pour fixer la position d'ouverture de base et les positions d'ouverture supplémentaires.

6. Distributeur selon la revendication 3, caractérisé en ce que le dispositif à organes de réglage (16 ; 22 ; 37 ; 54 ; 64 ; 74, 75 ; 91, 95 ; 168 ; 186, 193) comprend un premier organe de réglage (16 ; 169, 173 ; 186) à dispositif de manoeuvre rapide et un second organe de réglage (22 ; 37 ; 54 ; 64 ; 74, 75 ; 91, 95 ; 170 ; 193) à dispositif de manoeuvre lent.

7. Distributeur selon la revendication 6, caractérisé en ce que le premier organe de réglage (169, 173) et le second organe de réglage (170) sont montés en série.

8. Distributeur selon au moins l'une des revendications 3 à 7, caractérisé en ce que le dispositif d'organe de réglage (156 ; 168) est monté entre le dispositif à tiroirs (153 ; 165) et une plaque de fond (151 ; 167) comportant l'orifice de sortie (152 ; 164).

9. Distributeur selon au moins l'une des revendications 1 à 8, caractérisé en ce que le dispositif à tiroirs (47 ; 60 ; 68 ; 156 ; 165) comprend un seul tiroir (47 ; 60 ; 68 ; 156 ; 165).

10. Distributeur selon au moins l'une des revendications 1 à 8, caractérisé en ce que le dispositif à tiroirs (12, 13 ; 86, 90, 92 ; 182, 183) comprend un premier tiroir (12 ; 86 ; 182) et un second tiroir (13 ; 90 ; 92 ; 183), ces deux tiroirs coopérant pour fixer le degré d'ouverture de l'orifice de sortie (11 ; 85 ; 93 ; 181) et en ce que les deux tiroirs (12, 13 ; 86, 90, 92 ; 182, 183) peuvent être réglés dans une position d'ouverture de base et l'un des tiroirs (13 ; 90 ; 92 ; 183) peut être réglé dans les positions d'ouverture supplémentaires.

11. Distributeur selon la revendication 10, caractérisé en ce que le premier organe de réglage (16, 186) est relié au premier tiroir (12, 182) et le second organe de réglage (22 ; 37 ; 193) relie les deux tiroirs (13 ; 82, 183).

12. Distributeur selon la revendication 10 ou 11, caractérisé en ce que le premier organe de réglage (16 ; 186) est prévu entre le premier tiroir (12 ; 86 ; 182) et la plaque de fond (6 ; 84 ; 180).

13. Distributeur selon au moins l'une des revendications 6 à 12, caractérisé en ce que le premier organe de réglage comporte un étage de manoeuvre plus rapide qu'un vérin hydraulique.

14. Distributeur selon la revendication 13, caractérisé en ce que le premier organe de réglage est un vérin hydraulique (16 ; 169 ; 186) agissant dans le sens de la fermeture du dispositif à tiroirs (12, 13 ; 47 ; 60 ; 68 ; 86, 90, 92 ; 165 ; 182, 183) et un ressort de traction (18 ; 173 ; 186) agissant dans le sens de l'ouverture du dispositif à tiroirs (12, 13 ; 47 ; 60 ; 68 ; 86, 90, 92 ; 165 ; 182, 183).

15. Distributeur selon au moins l'une des revendications 1 à 14, caractérisé en ce que le dispositif à tiroirs (12, 13 ; 47 ; 60 ; 68 ; 86, 90, 92 ; 165 ; 182, 183) comporte une butée réglable (28 ; 50 ; 77, 78 ; 89 ; 174 ; 190) pour fixer la position d'ouverture de base.

16. Distributeur selon la revendication 15, caractérisé en ce que la butée (28 ; 89 ; 190) est associée au premier tiroir (12 ; 86 ; 182).

17. Distributeur selon au moins l'une des revendications 6 à 16, caractérisé en ce que le second organe de réglage (22 ; 37 ; 54, 56, 64 ; 74, 75 ; 91 ; 95 ; 170 ; 193) comporte un moyen de manoeuvre lent pour déterminer les positions d'ouverture supplémentaires.

18. Distributeur selon au moins l'une des revendications 6 à 17, caractérisé en ce que l'un ou/et le second organes de réglage (170 ; 193) comporte un moyen de manoeuvre plus lent que le moyen de réglage électrique (170 ; 193).

19. Distributeur selon au moins l'une des revendications 4 à 17, caractérisé en ce que l'unique et/ou le second organe de réglage (156) comportent un moyen de manoeuvre plus lent et un moyen de manoeuvre plus rapide que le vérin électrique ou le vérin hydraulique.

20. Distributeur selon au moins l'une des revendications 4 à 17, caractérisé en ce que chaque organe de réglage est un vérin électrique.

21. Distributeur selon au moins l'une des revendications 1 à 20, caractérisé en ce que le dispositif à tiroirs (12 ; 13 ; 47 ; 60 ; 68 ; 86, 92) comporte des butées réglables (25 ; 54 ; 64 ; 83 ; 94) pour fixer les positions d'ouverture supplémentaires.

22. Distributeur selon au moins l'une des revendications 1 à 21, caractérisé en ce que les dispositifs à tiroirs (12, 13 ; 47 ; 60 ; 68 ; 86, 90, 92 ; 153 ; 165 ; 182, 183) associés aux deux organes distributeurs sont commandés par des dispositifs de télécommande respectifs (156, 157 ; 168, 171, 175 ; 186, 187, 193, 194) indépendamment l'un de l'autre en position de fermeture, en position d'ouverture de base et dans les positions d'ouverture supplémentaires

23. Distributeur selon au moins l'une des revendications 10 à 22, caractérisé en ce que le premier tiroir (12 ; 86 ; 182) est placé entre le second tiroir (13 ;

90, 92 ; 183) et l'orifice de sortie (11 ; 85 ; 93 ; 181).

24. Distributeur selon au moins l'une des revendications 1 à 23, caractérisé en ce que le tiroir (13 ; 153 ; 165 ; 182) réglable en position de base comporte un index (35) et le distributeur est muni d'une échelle (27) avec une répartition en pourcentage, l'index et l'échelle coopérant.

25. Distributeur selon au moins l'une des revendications 1 à 24, caractérisé en ce que les dispositifs de télécommande (16, 19, 28, 37, 53, 54, 56, 64, 71, 74, 75, 91, 95 ; 156, 157 ; 168, 171, 175 ; 186, 187, 193, 194) sont actionnés à l'aide d'éléments de manoeuvre (158) prévus sur le tracteur qui porte ou qui tire le distributeur.

26. Distributeur selon au moins l'une des revendications 1 à 25, caractérisé en ce que le tracteur comporte au moins un élément d'affichage affichant la position du dispositif à tiroirs (12, 13 ; 60 ; 68 ; 86, 90 ; 82, 92 ; 165 ; 182, 183).

27°) Distributeur selon la revendication 26, caractérisé en ce qu'au moins l'élément d'affichage permet de lire le réglage du degré d'ouverture de l'orifice de sortie (11 ; 85 ; 93 ; 152 ; 164 ; 181).

EP 0 337 069 B1

**FIG.1**

**FIG.2**

18

# FIG. 3

FIG.4

FIG.5

FIG.6

FIG.7

FIG.8

FIG. 9

FIG. 10

FIG. 11

FIG. 12

FIG. 13

FIG. 14

FIG. 15

# FIG.16

# F I G . 17

FIG.18

FIG.19